# EUROPEAN PATENT APPLICATION

(11) **EP 4 797 746 A1**
(43) Date of publication of application: **26.08.2026**
(21) Application number: 24884514.1
(22) Date of filing: 22.10.2024
(51) Int. Cl.: H04W 8/24, H04W 28/02

(54) **DATA REPORTING METHOD AND RELATED APPARATUS**

(30) Priority: 03.11.2023 CN 202311468705
(71) Applicant: HUAWEI TECHNOLOGIES CO., LTD., Shenzhen 518129 (CN)
(72) Inventor: QIANG, Li, Shenzhen, Guangdong 518129 (CN); LI, Bingzhao, Shenzhen, Guangdong 518129 (CN); LIU, Nannan, Shenzhen, Guangdong 518129 (CN); KOZIOL, Dawid, Shenzhen, Guangdong 518129 (CN)
(74) Representative: Goddar, Heinz J.
(86) International application number: PCT/CN2024/126433
(87) International publication number: WO 2025/092510

(57) **Abstract**

This application discloses a data reporting method and a related apparatus. The data reporting method includes: determining a media access control MAC control element CE format based on configuration information, where the configuration information indicates a terminal device to report a data amount in a logical channel group LCG by using a parameter in a first BS table; and generating and reporting a buffer status information report corresponding to the MAC CE format. In embodiments of this application, finer-granularity BSR reporting can be implemented, and BSR reporting is more reasonably.

## Description

This application claims priority to Chinese Patent Application No. 202311468705.1, filed with the China National Intellectual Property Administration on November 3, 2023, and entitled "DATA REPORTING METHOD AND RELATED APPARATUS", which is incorporated herein by reference in its entirety.

### TECHNICAL FIELD

This application relates to the field of communication network technologies, and in particular, to a data reporting method and a related apparatus.

### BACKGROUND

In the field of communications, when user equipment (User Equipment, UE) has data to be sent, the UE needs to report a data amount in a buffer to a network by using a buffer status report (Buffer status report, BSR), and the network allocates an uplink sending resource to the UE accordingly. Currently, BSR reporting is implemented in four types: a short BSR (Short BSR), a short truncated BSR (Short Truncated BSR), a long BSR (Long BSR), and a long truncated BSR (Long Truncated BSR). With development of a communication system and emergence of new service scenarios, a data amount that needs to be reported by UE is continuously increasing. How to properly report a BSR is an urgent problem to be resolved currently.

### SUMMARY

Embodiments of this application provide a data reporting method and a related apparatus. In this application, a BSR can be properly reported by using an uplink transmission resource, to implement refined scheduling of network resources.

According to a first aspect, an embodiment of this application provides a data reporting method, applied to a terminal device or a chip in a terminal device. The method includes:
determining a media access control MAC control element CE format based on configuration information, where the configuration information indicates the terminal device to report a data amount in a logical channel group LCG by using a parameter in a first BS table; and
generating and reporting a buffer status information report corresponding to the MAC CE format.

It can be learned that, in this embodiment of this application, the terminal device may determine the corresponding MAC CE format based on the configuration information. The MAC CE format may be a conventional MAC CE format, or may be a newly defined MAC CE format. In the newly defined MAC CE format, an index in the first BS table may be used to report the buffered data amount. Because the index in the first BS table is more finely divided, the terminal device can implement finer-granularity BSR reporting, and BSR reporting is more reasonable.

In a possible implementation, the buffer status information report includes a buffer status report BSR; and determining the media access control MAC control element CE format based on the configuration information includes:
if the terminal device has an LCG having a first to-be-reported data amount, determining, based on the configuration information, that the MAC CE format is a first format, where a BSR MAC CE corresponding to the first format includes a first indication field and a second indication field, the first indication field indicates the first data amount corresponding to the LCG, and the second indication field indicates that information in the first indication field is represented by using the parameter in the first BS table or represented by using a parameter in a second BS table.

In this implementation, the terminal device may select the first format based on the configuration information to report the BSR. In the first format, an index in the first BS table may indicate the data amount in a buffer size, or an index in the second BS table may indicate the data amount in a buffer size. A manner of reporting the data amount is flexible. In addition, when the index in the first BS table indicates the data amount in the buffer size in the first format, both a new BS table and a new MAC CE format are used. This helps implement finer-granularity reporting of the data amount, and reporting is more reasonable.

In a possible implementation, the buffer status information report includes a buffer status report BSR; and determining the media access control MAC control element CE format based on the configuration information includes:
if the terminal device has only one LCG having a first to-be-reported data amount, determining, based on the configuration information, that the MAC CE format is a second format, where a BSR MAC CE corresponding to the second format includes a first indication field, the first indication field indicates the first data amount corresponding to the LCG, and information in the first indication field is represented by using the parameter in the first BS table.

In this implementation, the new MAC CE format is introduced. The terminal device may select, based on the configuration information, the second format to report the BSR. In the second format, an index in the first BS table indicates the data amount in a buffer size. This helps implement finer-granularity reporting of the data amount. In addition, compared with an existing MAC CE format, the new MAC CE format uses a fixed length of two bytes, so that overheads of reporting the data amount can be reduced, thereby improving a gain of reporting the BSR.

In a possible implementation, a MAC subheader of the BSR MAC CE corresponding to the second format includes a third indication field, and the third indication field indicates that the BSR MAC CE is a BSR MAC CE of a second format type.

In this implementation, the terminal device may newly define an LCID or an eLCID in an outer MAC subheader of the BSR MAC CE corresponding to the second format, to indicate that a subsequent MAC CE is in the second format.

In a possible implementation, the first format includes an enhanced BSR format or an enhanced long BSR format.

In this implementation, the first format may be the enhanced BSR format or the enhanced long BSR format, so that the BSR can be reported by flexibly using the parameter in the first BS table or the second BS table.

In a possible implementation, the second format includes an enhanced short BSR format or an enhanced short truncated BSR format.

In this implementation, the second format may be the enhanced short BSR format or the enhanced short truncated BSR format, so that the BSR may be reported by using the parameter in the first BS table, thereby implementing finer-granularity BSR reporting. In addition, reporting overheads can be reduced, and this is more reasonable.

In a possible implementation, the BSR is a regular Regular BSR or a periodic periodic BSR.

In a possible implementation, the buffer status information report includes a delay status report DSR, a DSR MAC CE corresponding to the MAC CE format includes a fourth indication field and a fifth indication field, the fourth indication field indicates a second data amount that needs to be reported in the corresponding LCG, and the fifth indication field indicates a remaining time to expiration of data corresponding to the second data amount.

In this implementation, when reporting a data amount of emergency data, the terminal device may select, based on the configuration information, a parameter in a new BS table to report the data amount, and may select a new MAC CE format like an enhanced BSR format, an enhanced long BSR format, an enhanced short BSR format, or an enhanced short truncated BSR format to report the DSR, thereby implementing more reasonable and finer-granularity reporting of the data amount. Certainly, the terminal device may alternatively select a conventional MAC CE format to report the DSR, and a reporting manner is flexible.

In a possible implementation, the data corresponding to the second data amount includes data corresponding to a service data unit SDU that is deleted by a radio link control RLC layer indicated by a packet data convergence protocol PDCP layer, and the PDCP layer indicates, when a discard timer of the data corresponding to the SDU expires, the RLC layer to delete the SDU, where
if the data corresponding to the SDU or at least one segment of the SDU has been delivered to a lower layer, a remaining time to expiration of the data corresponding to the SDU or the at least one segment of the SDU is 0; or a remaining time to expiration of the data corresponding to the SDU or the at least one segment of the SDU is a minimum value in a remaining time to expiration of at least one piece of target data, where the at least one piece of target data is data other than the SDU or the at least one segment of the SDU in the data corresponding to the second data amount; or a data amount of the data corresponding to the SDU or at least one segment of the SDU is reported by using a BSR.

In this implementation, the PDCP layer indicates the RLC layer to delete the data corresponding to the SDU because the discard timer expires, but the terminal device may still use the DSR to report the data amount of the data, and set a remaining time to expiration for the data, so that the data can be normally processed and sent to a network side. This helps ensure that emergency data is not discarded, and further ensures data integrity. Optionally, the terminal device may also report, by using the BSR, the data corresponding to the SDU or the at least one segment of the SDU, to ensure that the data is not discarded.

According to a second aspect, an embodiment of this application provides a data reporting method, applied to a terminal device or a chip in a terminal device. The method includes:
determining a media access control MAC control element CE format based on a quantity of padding bits and configuration information, where the configuration information indicates the terminal device to report a data amount in a logical channel group LCG by using a parameter in a first BS table; and
generating and reporting a buffer status information report corresponding to the MAC CE format.

It can be learned that, in this embodiment of this application, the terminal device may determine the corresponding MAC CE format based on the quantity of padding bits and the configuration information. The MAC CE format may be a conventional MAC CE format, or may be a newly defined MAC CE format. In the newly defined MAC CE format, an index in the first BS table may be used to report the buffered data amount. Because the index in the first BS table is more finely divided, the terminal device can implement finer-granularity BSR reporting, and BSR reporting is more reasonable.

In a possible implementation, the buffer status information report includes a buffer status report BSR; and determining the media access control MAC control element CE format based on the quantity of padding bits and the configuration information includes:
if the terminal device has an LCG having a first to-be-reported data amount, and the quantity of padding bits is greater than or equal to a sum of a size of a BSR MAC CE corresponding to a first format and a size of a MAC subheader of the BSR MAC CE corresponding to the first format, determining, based on the configuration information, that the MAC CE format is the first format, where the BSR MAC CE corresponding to the first format includes a first indication field and a second indication field, the first indication field indicates the first data amount that needs to be reported in the corresponding LCG, and the second indication field indicates that information in the first indication field is represented by using the parameter in the first BS table or a parameter in a second BS table.

In this implementation, the terminal device compares the quantity of padding bits with the size of the BSR MAC CE corresponding to the first format, and may select the first format to report the BSR. In the first format, an index in the first BS table may indicate the data amount in a buffer size, or an index in the second BS table may indicate the data amount in a buffer size. A manner of reporting the data amount is flexible. In addition, when the index in the first BS table indicates the data amount in the buffer size in the first format, both a new BS table and a new MAC CE format are used. This helps implement finer-granularity reporting of the data amount, and reporting is more reasonable.

In a possible implementation, the buffer status information report includes a buffer status report BSR; and determining the media access control MAC control element CE format based on the quantity of padding bits and the configuration information includes:
if the terminal device has a plurality of LCGs having first to-be-reported data amounts, the quantity of padding bits is greater than or equal to a sum of three bytes and the size of the MAC subheader of the BSR MAC CE corresponding to the first format, and is less than a sum of the size of the BSR MAC CE corresponding to the first format and the size of the MAC subheader of the BSR MAC CE corresponding to the first format, determining, based on the configuration information, that the MAC CE format is the third format, where the third format is a truncated type of the first format.

In this implementation, when the quantity of padding bits is greater than or equal to the sum of three bytes and the size of the MAC subheader of the BSR MAC CE corresponding to the first format, and is less than the sum of the size of the BSR MAC CE corresponding to the first format and the size of the MAC subheader of the BSR MAC CE corresponding to the first format, the terminal device may report the data amount by using the truncated type (that is, the third format) of the first format. In the third format, an index in the first BS table may indicate the data amount in a buffer size, or an index in the second BS table may indicate the data amount in a buffer size. A manner of reporting the data amount is flexible. In addition, when the index in the first BS table indicates the data amount in the buffer size in the third format, both a new BS table and a new MAC CE format are used. This helps implement finer-granularity reporting of the data amount, and reporting is more reasonable.

In a possible implementation, the buffer status information report includes a buffer status report BSR; and determining the media access control MAC control element CE format based on the quantity of padding bits and the configuration information includes:
if the terminal device has a plurality of LCGs having first to-be-reported data amounts, and the quantity of padding bits is greater than or equal to a sum of two bytes and a size of a MAC subheader of a long BSR MAC CE, and is less than a sum of three bytes and a size of a MAC subheader of a BSR MAC CE corresponding to a first format, determining, based on the configuration information, that the MAC CE format is a long truncated BSR format.

In this implementation, when the quantity of padding bits is greater than or equal to the sum of the two bytes and the size of the MAC subheader of the long BSR MAC CE, and is less than the sum of three bytes and the size of the MAC subheader of the BSR MAC CE corresponding to the first format, and there are a plurality of LCGs having to-be-sent data, the terminal device may report the data amounts in the long truncated BSR format, so that buffer statuses of the LCGs can be reported as much as possible.

In a possible implementation, the buffer status information report includes a buffer status report BSR; and determining the media access control MAC control element CE format based on the quantity of padding bits and the configuration information includes:
if the quantity of padding bits is less than a sum of two bytes and a size of a MAC subheader of a long BSR MAC CE, and the terminal device has a plurality of LCGs having first to-be-reported data amounts, determining, based on the configuration information, that the MAC CE format is a short truncated BSR format; or
if the quantity of padding bits is less than a sum of two bytes and a size of a MAC subheader of a long BSR MAC CE, and the terminal device has one LCG having the first to-be-reported data amount, determining, based on the configuration information, that the MAC CE format is a short BSR format.

In this implementation, when the quantity of padding bits is less than the sum of two bytes and the size of the MAC subheader of the long BSR MAC CE, the terminal device may determine, based on the quantity of LCGs in which the data is to be reported, to use the short truncated BSR format or the short BSR format.

In a possible implementation, the first format includes an enhanced BSR format or an enhanced long BSR format.

In this implementation, the first format may be the enhanced BSR format or the enhanced long BSR format, so that the BSR can be reported by flexibly using the parameter in the first BS table or the second BS table.

In a possible implementation, the buffer status information report includes a delay status report DSR, a DSR MAC CE corresponding to the MAC CE format includes a fourth indication field and a fifth indication field, the fourth indication field indicates a second data amount that needs to be reported in the corresponding LCG, and the fifth indication field indicates a remaining time to expiration of data corresponding to the second data amount.

In this implementation, when reporting a data amount of emergency data, the terminal device may select, based on the configuration information, a parameter in a new BS table to report the data amount, and may select a new MAC CE format like an enhanced BSR format, an enhanced long BSR format, an enhanced truncated BSR format, or an enhanced long truncated BSR format to report the DSR, thereby implementing more reasonable and finer-granularity reporting of the data amount. Certainly, the terminal device may alternatively select a conventional MAC CE format to report the DSR, and a reporting manner is flexible.

In a possible implementation, the data corresponding to the second data amount includes data corresponding to a service data unit SDU that is deleted by a radio link control RLC layer indicated by a packet data convergence protocol PDCP layer, and the PDCP layer indicates, when a discard timer of the data corresponding to the SDU expires, the RLC layer to delete the SDU, where
if the data corresponding to the SDU or at least one segment of the SDU has been delivered to a lower layer, a remaining time to expiration of the data corresponding to the SDU or the at least one segment of the SDU is 0; or a remaining time to expiration of the data corresponding to the SDU or the at least one segment of the SDU is a minimum value in a remaining time to expiration of at least one piece of target data, where the at least one piece of target data is data other than the SDU or the at least one segment of the SDU in the data corresponding to the second data amount; or a data amount of the data corresponding to the SDU or at least one segment of the SDU is reported by using a buffer status report BSR.

In this implementation, the PDCP layer indicates the RLC layer to delete the data corresponding to the SDU because the discard timer expires, but the terminal device may still use the DSR to report the data amount of the data, and set a remaining time to expiration for the data, so that the data can be normally processed and sent to a network side. This helps ensure that emergency data is not discarded, and further ensures data integrity. Optionally, the terminal device may also report, by using the BSR, the data corresponding to the SDU or the at least one segment of the SDU, to ensure that the data is not discarded.

According to a third aspect, an embodiment of this application provides a data reporting apparatus, applied to a transmit end device or a chip in a transmit end device. The apparatus includes a processing unit, and the processing unit is configured to:
determine a media access control MAC control element CE format based on configuration information, where the configuration information indicates the terminal device to report a data amount in a logical channel group LCG by using a parameter in a first BS table; and
generate and report a buffer status information report corresponding to the MAC CE format.

In a possible implementation, the buffer status information report includes a buffer status report BSR; and in the aspect of determining the media access control MAC control element CE format based on the configuration information, the processing unit is specifically configured to:
if the terminal device has an LCG having a first to-be-reported data amount, determine, based on the configuration information, that the MAC CE format is a first format, where a BSR MAC CE corresponding to the first format includes a first indication field and a second indication field, the first indication field indicates the first data amount corresponding to the LCG, and the second indication field indicates that information in the first indication field is represented by using the parameter in the first BS table or represented by using a parameter in a second BS table.

In a possible implementation, the buffer status information report includes a buffer status report BSR; and in the aspect of determining the media access control MAC control element CE format based on the configuration information, the processing unit is specifically configured to:
if the terminal device has only one LCG having a first to-be-reported data amount, determine, based on the configuration information, that the MAC CE format is a second format, where a BSR MAC CE corresponding to the second format includes a first indication field, the first indication field indicates the first data amount corresponding to the LCG, and information in the first indication field is represented by using the parameter in the first BS table.

In a possible implementation, a MAC subheader of the BSR MAC CE corresponding to the second format includes a third indication field, and the third indication field indicates that the BSR MAC CE is a BSR MAC CE of a second format type.

In a possible implementation, the first format includes an enhanced BSR format or an enhanced long BSR format.

In a possible implementation, the second format includes an enhanced short BSR format or an enhanced short truncated BSR format.

In a possible implementation, the BSR is a regular Regular BSR or a periodic periodic BSR.

In a possible implementation, the buffer status information report includes a delay status report DSR, a DSR MAC CE corresponding to the MAC CE format includes a fourth indication field and a fifth indication field, the fourth indication field indicates a second data amount that needs to be reported in the corresponding LCG, and the fifth indication field indicates a remaining time to expiration of data corresponding to the second data amount.

In a possible implementation, the data corresponding to the second data amount includes data corresponding to a service data unit SDU that is deleted by a radio link control RLC layer indicated by a packet data convergence protocol PDCP layer, and the PDCP layer indicates, when a discard timer of the data corresponding to the SDU expires, the RLC layer to delete the SDU, where
if the data corresponding to the SDU or at least one segment of the SDU has been delivered to a lower layer, a remaining time to expiration of the data corresponding to the SDU or the at least one segment of the SDU is 0; or a remaining time to expiration of the data corresponding to the SDU or the at least one segment of the SDU is a minimum value in a remaining time to expiration of at least one piece of target data, where the at least one piece of target data is data other than the SDU or the at least one segment of the SDU in the data corresponding to the second data amount; or a data amount of the data corresponding to the SDU or at least one segment of the SDU is reported by using a BSR.

It should be understood that the method embodiment and the apparatus embodiment are different presentation forms of a same technical concept. Therefore, content in the first aspect of embodiments of this application should be correspondingly applied to the third aspect of embodiments of this application, and same or similar beneficial effects can be achieved. Details are not described herein again.

According to a fourth aspect, an embodiment of this application provides a data reporting apparatus, applied to a transmit end device or a chip in a transmit end device. The apparatus includes a processing unit, and the processing unit is configured to:
determine a media access control MAC control element CE format based on a quantity of padding bits and configuration information, where the configuration information indicates the terminal device to report a data amount in a logical channel group LCG by using a parameter in a first BS table; and
generate and report a buffer status information report corresponding to the MAC CE format.

In a possible implementation, the buffer status information report includes a buffer status report BSR; and in the aspect of determining the media access control MAC control element CE format based on the quantity of padding bits and the configuration information, the processing unit is specifically configured to:
if the terminal device has an LCG having a first to-be-reported data amount, and the quantity of padding bits is greater than or equal to a sum of a size of a BSR MAC CE corresponding to a first format and a size of a MAC subheader of the BSR MAC CE corresponding to the first format, determine, based on the configuration information, that the MAC CE format is the first format, where the BSR MAC CE corresponding to the first format includes a first indication field and a second indication field, the first indication field indicates the first data amount that needs to be reported in the corresponding LCG, and the second indication field indicates that information in the first indication field is represented by using the parameter in the first BS table or a parameter in a second BS table.

In a possible implementation, the buffer status information report includes a buffer status report BSR; and in the aspect of determining the media access control MAC control element CE format based on the quantity of padding bits and the configuration information, the processing unit is specifically configured to:
if the terminal device has a plurality of LCGs having the first to-be-reported data amount, the quantity of padding bits is greater than or equal to a sum of three bytes and the size of the MAC subheader of the BSR MAC CE corresponding to the first format, and is less than a sum of the size of the BSR MAC CE corresponding to the first format and the size of the MAC subheader of the BSR MAC CE corresponding to the first format, determine, based on the configuration information, that the MAC CE format is the third format, where the third format is a truncated type of the first format.

In a possible implementation, the buffer status information report includes a buffer status report BSR; and in the aspect of determining the media access control MAC control element CE format based on the quantity of padding bits and the configuration information, the processing unit is specifically configured to:
if the terminal device has a plurality of LCGs having first to-be-reported data amounts, and the quantity of padding bits is greater than or equal to a sum of two bytes and a size of a MAC subheader of a long BSR MAC CE, and is less than a sum of three bytes and a size of a MAC subheader of a BSR MAC CE corresponding to a first format, determine, based on the configuration information, that the MAC CE format is a long truncated BSR format.

In a possible implementation, the buffer status information report includes a buffer status report BSR; and in the aspect of determining the media access control MAC control element CE format based on the quantity of padding bits and the configuration information, the processing unit is specifically configured to:
if the quantity of padding bits is less than a sum of two bytes and a size of a MAC subheader of a long BSR MAC CE, and the terminal device has a plurality of LCGs having first to-be-reported data amounts, determine, based on the configuration information, that the MAC CE format is a short truncated BSR format; or
if the quantity of padding bits is less than a sum of two bytes and a size of a MAC subheader of a long BSR MAC CE, and the terminal device has one LCG having the first to-be-reported data amount, determine, based on the configuration information, that the MAC CE format is a short BSR format.

In a possible implementation, the first format includes an enhanced BSR format or an enhanced long BSR format.

In a possible implementation, the buffer status information report includes a delay status report DSR, a DSR MAC CE corresponding to the MAC CE format includes a fourth indication field and a fifth indication field, the fourth indication field indicates a second data amount that needs to be reported in the corresponding LCG, and the fifth indication field indicates a remaining time to expiration of data corresponding to the second data amount.

In a possible implementation, the data corresponding to the second data amount includes data corresponding to a service data unit SDU that is deleted by a radio link control RLC layer indicated by a packet data convergence protocol PDCP layer, and the PDCP layer indicates, when a discard timer of the data corresponding to the SDU expires, the RLC layer to delete the SDU, where
if the data corresponding to the SDU or at least one segment of the SDU has been delivered to a lower layer, a remaining time to expiration of the data corresponding to the SDU or the at least one segment of the SDU is 0; or a remaining time to expiration of the data corresponding to the SDU or the at least one segment of the SDU is a minimum value in a remaining time to expiration of at least one piece of target data, where the at least one piece of target data is data other than the SDU or the at least one segment of the SDU in the data corresponding to the second data amount; or a data amount of the data corresponding to the SDU or at least one segment of the SDU is reported by using a buffer status report BSR.

It should be understood that the method embodiment and the apparatus embodiment are different presentation forms of a same technical concept. Therefore, content in the second aspect of embodiments of this application should be correspondingly applied to the fourth aspect of embodiments of this application, and same or similar beneficial effects can be achieved. Details are not described herein again.

According to a fifth aspect, an embodiment of this application provides a communication device, including a processor, a memory, a communication interface, and one or more programs. The one or more programs are stored in the memory, and when being configured to be executed by the processor, the one or more programs cooperate with the communication interface to implement the method according to any one of the embodiments of the first aspect or the second aspect.

According to a sixth aspect, an embodiment of this application provides a chip. The chip includes a processor, configured to invoke a computer program from a memory and run the computer program, to enable a device equipped with the chip to perform the method according to any one of the embodiments of the first aspect or the second aspect.

According to a seventh aspect, an embodiment of this application provides a computer-readable storage medium. The computer-readable storage medium stores a computer program to be executed by a device, and when the computer program is executed, the method according to any one of the embodiments of the first aspect or the second aspect is implemented.

According to an eighth aspect, an embodiment of this application provides a computer program product. When the computer program product is run by a communication device, the communication device is enabled to perform the method according to any one of the embodiments of the first aspect or the second aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a MAC CE format;
FIG. 2 is a diagram of another MAC CE format;
FIG. 3 is a diagram of another MAC CE format;
FIG. 4 is a diagram of a system architecture according to an embodiment of this application;
FIG. 5 is a schematic flowchart of a data reporting method according to an embodiment of this application;
FIG. 6 is a diagram of a MAC CE format according to an embodiment of this application;
FIG. 7 is a diagram of another MAC CE format according to an embodiment of this application;
FIG. 8A is a diagram of another MAC CE format according to an embodiment of this application;
FIG. 8B is a diagram of another MAC CE format according to an embodiment of this application;
FIG. 9 is a diagram of another MAC CE format according to an embodiment of this application;
FIG. 10 is a diagram of another MAC CE format according to an embodiment of this application;
FIG. 11 is a diagram of a discard timer of a data packet according to an embodiment of this application;
FIG. 12 is a schematic flowchart of another data reporting method according to an embodiment of this application;
FIG. 13 is a schematic flowchart of another data reporting method according to an embodiment of this application;
FIG. 14 is a schematic flowchart of another data reporting method according to an embodiment of this application;
FIG. 15 is a diagram of a structure of a data reporting apparatus according to an embodiment of this application;
FIG. 16 is a diagram of a structure of another data reporting apparatus according to an embodiment of this application; and
FIG. 17 is a diagram of a structure of a communication device according to an embodiment of this application.

### DESCRIPTION OF EMBODIMENTS

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

"Embodiments" mentioned in this specification mean that specific features, structures, or characteristics described in combination with embodiments may be included in at least one embodiment of this application. The term shown in various locations in this specification may not necessarily refer to a same embodiment or an independent or optional embodiment that is mutually exclusive with another embodiment. A person skilled in the art explicitly or implicitly understands that embodiments described in this specification may be combined with other embodiments.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a terminal device and an application that runs on the terminal device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

First, related terms and related technical background in this application are briefly described, to facilitate understanding of a person skilled in the art.
(1) LCG: Logical channel group, logical channel group.
(2) BSR: UE reports a data amount in each LCG to a network.
(3) DSR: Delay status report, delay status report, where UE reports an urgent data amount in each LCG and a remaining time before the data amount expires to a network.
(4) LCID: Logical channel ID, logical channel ID, used to identify a type of a subsequent media access control (Medium Access Control, MAC) control element (Control Element, CE).
(5) eLCID: Extended LCID, extended logical channel ID.
(6) XR: Extended Reality, a general term of a virtual reality VR technology, an augmented reality AR technology, and the like.

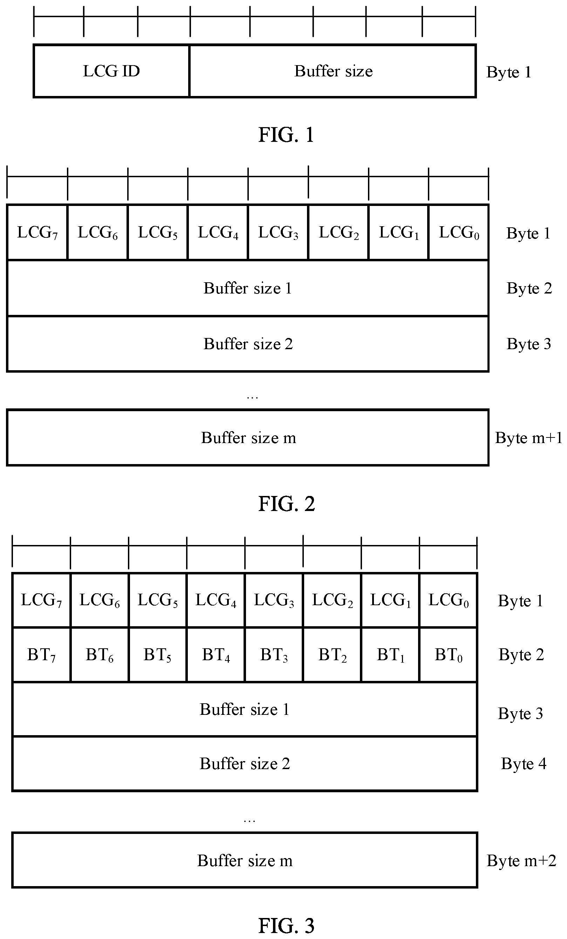

It should be understood that, currently, when UE reports a data amount, there are two formats and four types of BSRs shown in FIG. 1 and FIG. 2. FIG. 1 shows a format corresponding to a short BSR and a short truncated BSR. The format includes an indication field of a logical channel group ID (LCG ID) and an indication field of a data amount in a buffer size (buffer Size). FIG. 2 shows a format corresponding to a long BSR and a long truncated BSR. In the format, LCG IDs are placed in a first byte, and then a buffer size corresponding to each LCG is added in sequence. A difference between the two formats shown in FIG. 1 and FIG. 2 mainly lies in a buffer size field. In the former, five bits are occupied, and in the latter, eight bits are occupied. This is actually related to a used buffer status table (Buffer status table, BS table). When reporting the data amount, the UE needs to query the BS table based on the data amount, and fill a corresponding index (index) field in the BS table in the buffer size field. Currently, there are two BS tables. One is Table 1, and there are a total of 2⁵=32 indexes.

**Table 1**

| Index | BS value | Index | BS value | Index | BS value | Index | BS value |
|---|---|---|---|---|---|---|---|
| 0 | 0 | 8 | ≤102 | 16 | ≤1446 | 24 | ≤20516 |
| 1 | ≤10 | 9 | ≤142 | 17 | ≤2014 | 25 | ≤28581 |
| 2 | ≤14 | 10 | ≤198 | 18 | ≤2806 | 26 | ≤39818 |
| 3 | ≤20 | 11 | ≤276 | 19 | ≤3909 | 27 | ≤55474 |
| 4 | ≤28 | 12 | ≤384 | 20 | ≤5446 | 28 | ≤77284 |
| 5 | ≤38 | 13 | ≤535 | 21 | ≤7587 | 29 | ≤107669 |
| 6 | ≤53 | 14 | ≤745 | 22 | ≤10570 | 30 | ≤150000 |
| 7 | ≤74 | 15 | 1038 | 23 | ≤14726 | 31 | >150000 |

The other table is shown in Table 2, and there are 2⁸=256 indexes.

**Table 2**

| Index | BS value | Index | BS value | Index | BS value | Index | BS value |
|---|---|---|---|---|---|---|---|
| 0 | 0 | 64 | ≤560 | 128 | ≤31342 | 192 | ≤1754595 |
| 1 | ≤10 | 65 | ≤597 | 129 | ≤33376 | 193 | ≤1868488 |
| 2 | ≤11 | 66 | ≤635 | 130 | ≤35543 | 194 | ≤1989774 |
| 3 | ≤12 | 67 | ≤677 | 131 | ≤37850 | 195 | ≤2118933 |
| 4 | ≤13 | 68 | ≤720 | 132 | ≤40307 | 196 | ≤2256475 |
| 5 | ≤14 | 69 | ≤767 | 133 | ≤42923 | 197 | ≤2402946 |
| 6 | ≤15 | 70 | ≤817 | 134 | ≤45709 | 198 | ≤2558924 |
| 7 | ≤16 | 71 | ≤870 | 135 | ≤48676 | 199 | ≤2725027 |
| 8 | ≤17 | 72 | ≤926 | 136 | ≤51836 | 200 | ≤2901912 |
| 9 | ≤18 | 73 | ≤987 | 137 | ≤55200 | 201 | ≤3090279 |
| 10 | ≤19 | 74 | ≤1051 | 138 | ≤58784 | 202 | ≤3290873 |
| 11 | ≤20 | 75 | ≤1119 | 139 | ≤62599 | 203 | ≤3504487 |
| 12 | ≤22 | 76 | ≤1191 | 140 | ≤66663 | 204 | ≤3731968 |
| 13 | ≤23 | 77 | ≤1269 | 141 | ≤70990 | 205 | ≤3974215 |
| 14 | ≤25 | 78 | ≤1351 | 142 | ≤75598 | 206 | ≤4232186 |
| 15 | ≤26 | 79 | ≤1439 | 143 | ≤80505 | 207 | ≤4506902 |
| 16 | ≤28 | 80 | ≤1532 | 144 | ≤85730 | 208 | ≤4799451 |
| 17 | ≤30 | 81 | ≤1631 | 145 | ≤91295 | 209 | ≤5110989 |
| 18 | ≤32 | 82 | ≤1737 | 146 | ≤97221 | 210 | ≤5442750 |
| 19 | ≤34 | 83 | ≤1850 | 147 | ≤103532 | 211 | ≤5796046 |
| 20 | ≤36 | 84 | ≤1970 | 148 | ≤110252 | 212 | ≤6172275 |
| 21 | ≤38 | 85 | ≤2098 | 149 | ≤117409 | 213 | ≤6572925 |
| 22 | ≤40 | 86 | ≤2234 | 150 | ≤125030 | 214 | ≤6999582 |
| 23 | ≤43 | 87 | ≤2379 | 151 | ≤133146 | 215 | ≤7453933 |
| 24 | ≤46 | 88 | ≤2533 | 152 | <141789 | 216 | ≤7937777 |
| 25 | ≤49 | 89 | ≤2698 | 153 | ≤150992 | 217 | ≤8453028 |
| 26 | ≤52 | 90 | ≤2873 | 154 | ≤160793 | 218 | ≤9001725 |
| 27 | ≤55 | 91 | ≤3059 | 155 | ≤171231 | 219 | ≤9586039 |
| 28 | ≤59 | 92 | ≤3258 | 156 | ≤182345 | 220 | ≤10208280 |
| 29 | ≤62 | 93 | ≤3469 | 157 | ≤194182 | 221 | ≤10870913 |
| 30 | ≤66 | 94 | ≤3694 | 158 | ≤206786 | 222 | ≤11576557 |
| 31 | ≤71 | 95 | ≤3934 | 159 | ≤220209 | 223 | ≤12328006 |
| 32 | ≤75 | 96 | ≤4189 | 160 | ≤234503 | 224 | ≤13128233 |
| 33 | ≤80 | 97 | ≤4461 | 161 | ≤249725 | 225 | ≤13980403 |
| 34 | ≤85 | 98 | ≤4751 | 162 | ≤265935 | 226 | ≤14887889 |
| 35 | ≤91 | 99 | ≤5059 | 163 | ≤283197 | 227 | ≤15854280 |
| 36 | ≤97 | 100 | ≤5387 | 164 | ≤301579 | 228 | ≤16883401 |
| 37 | ≤103 | 101 | ≤5737 | 165 | ≤321155 | 229 | ≤17979324 |
| 38 | ≤110 | 102 | ≤6109 | 166 | ≤342002 | 230 | ≤19146385 |
| 39 | ≤117 | 103 | ≤6506 | 167 | ≤364202 | 231 | ≤20389201 |
| 40 | ≤124 | 104 | ≤6928 | 168 | ≤387842 | 232 | ≤21712690 |
| 41 | ≤132 | 105 | ≤7378 | 169 | ≤413018 | 233 | ≤23122088 |
| 42 | ≤141 | 106 | ≤7857 | 170 | ≤439827 | 234 | ≤24622972 |
| 43 | ≤150 | 107 | ≤8367 | 171 | ≤468377 | 235 | ≤26221280 |
| 44 | ≤160 | 108 | ≤8910 | 172 | ≤498780 | 236 | ≤27923336 |
| 45 | ≤170 | 109 | ≤9488 | 173 | ≤531156 | 237 | ≤29735875 |
| 46 | ≤181 | 110 | ≤10104 | 174 | ≤565634 | 238 | ≤31666069 |
| 47 | ≤193 | 111 | ≤10760 | 175 | ≤602350 | 239 | ≤33721553 |
| 48 | ≤205 | 112 | ≤11458 | 176 | ≤641449 | 240 | ≤35910462 |
| 49 | ≤218 | 113 | ≤12202 | 177 | ≤683087 | 241 | ≤38241455 |
| 50 | ≤233 | 114 | ≤12994 | 178 | ≤727427 | 242 | ≤40723756 |
| 51 | ≤248 | 115 | ≤13838 | 179 | ≤774645 | 243 | ≤43367187 |
| 52 | ≤264 | 116 | ≤14736 | 180 | ≤824928 | 244 | ≤46182206 |
| 53 | ≤281 | 117 | ≤15692 | 181 | ≤878475 | 245 | ≤49179951 |
| 54 | ≤299 | 118 | ≤16711 | 182 | ≤935498 | 246 | ≤52372284 |
| 55 | ≤318 | 119 | ≤17795 | 183 | ≤996222 | 247 | ≤55771835 |
| 56 | ≤339 | 120 | ≤18951 | 184 | ≤1060888 | 248 | ≤59392055 |
| 57 | ≤361 | 121 | ≤20181 | 185 | ≤1129752 | 249 | ≤63247269 |
| 58 | ≤384 | 122 | ≤21491 | 186 | ≤1203085 | 250 | ≤67352729 |
| 59 | ≤409 | 123 | ≤22885 | 187 | ≤1281179 | 251 | ≤71724679 |
| 60 | ≤436 | 124 | ≤24371 | 188 | ≤1364342 | 252 | ≤76380419 |
| 61 | ≤464 | 125 | ≤25953 | 189 | ≤1452903 | 253 | ≤81338368 |
| 62 | ≤494 | 126 | ≤27638 | 190 | <1547213 | 254 | >81338368 |
| 63 | ≤526 | 127 | ≤29431 | 191 | ≤1647644 | 255 | Reserved |

Currently, a rule for selecting the four types of BSRs is as follows.

### For a regular (Regular) BSR or a periodic (periodic) BSR:

| | |
|---|---|
| 1> If there are a plurality of LCGs having to-be-reported data: | |
| | 2> The long BSR is used; |
| 1> If there is one LCG having to-be-reported data: | |
| | 2> The short BSR is used; |

### For a padding (padding) BSR:

| | |
|---|---|
| 1> If a short BSR+a MAC subheader<=a padding bit bit<a Long BSR+a MAC subheader (indicating that there are only three options: short, short truncated, and long truncated) | |
| 2> If there are a plurality of LCGs having to-be-reported data (indicating that the truncated type needs to be used) | |
| 3> The padding bit=the short BSR+the MAC subheader (the short BSR and the short truncated BSR are actually of a same length) | |
| | 4> The short truncated BSR is used; |
| 3> Otherwise | |
| 4> The long truncated BSR is used; | |
| | 2> Otherwise, it indicates that only one LCG has to-be-reported data |
| 3> The short BSR is used; | |
| 1> If the padding bit>=the long BSR+the MAC subheader (indicating that a remaining quantity of bits bits is still sufficient) | |
| | 2> The long BSR is used; |

In research of an XR service scenario, an 8-bit BS table is introduced. Compared with that of the table shown in Table 2, a value range of the new table is different. Specifically, the value range of the new table may be smaller, and a range indicated by each index in the new BS table is finer. Therefore, when both the old BS table and the new BS table exist, there is such a problem. For example, a range indicated by an index 1 in the old BS table may be 1 to 100, but a range indicated by the index 1 in the new BS table is 1 to 10. A base station receives the index 1 from the UE, but does not know whether the index 1 is obtained from the old BS table or the new BS table. To resolve this problem, a new MAC CE is introduced in the XR research. A format of the MAC CE is shown in FIG. 3. The MAC CE shown in FIG. 3 has the format similar to that shown in FIG. 2. A difference lies in that a one-byte "BTᵢ" field is added. This field indicates whether a corresponding buffer size i uses an index in the new BS table or an index in the old BS table. The new BS table is used if the buffered data amount in the UE can be represented by the index in the new BS table. The original BS table is used only when the buffered data amount in the UE cannot be represented by the new BS table. Whether the UE can use the new BS table depends on a configuration of each LCG by the network.

Based on the existing BSR selection rule and two BS tables, the new problems occur.

First, when to use the MAC CE in the format shown in FIG. 3. Some researchers have proposed that when at least one LCG of the UE is configured by the network to use the new BS table, there is to-be-transmitted data in the LCG, and the to-be-transmitted data amount falls within the range of the new BS table, the UE uses the MAC CE in FIG. 3. In other words, if the UE has no LCG in which the new BS table can be used and that has to-be-reported data, or if there is to-be-reported data but the new BS table cannot cover the data and only the old BS table can be used, the UE still needs to use a MAC CE in the conventional format.

Second, in the existing rule for selecting a regular/periodic BSR format, the short BSR is used when the UE has only one LCG having to-be-reported data. This means that if the UE has only one LCG having data, the UE cannot use the new BS table to report the data in the LCG. How to perform selection if the UE needs to report the data amount in the LCG by using the new BS table?

Third, in the existing rule for selecting the padding/regular/periodic BSR format, the MAC CE in the format shown in FIG. 3 is not used for reporting. How to perform selection between the conventional MAC CE format and the MAC CE format shown in FIG. 3 to properly report the BSR?

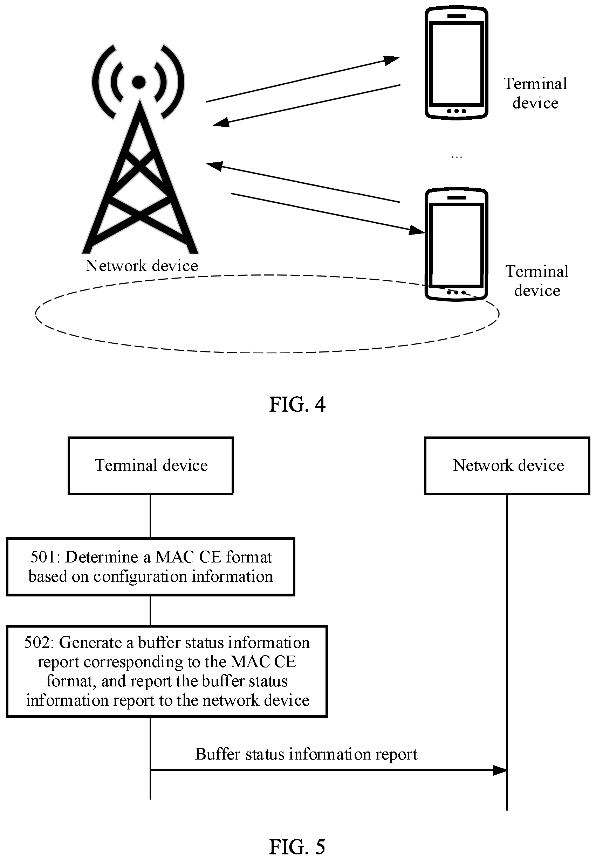

To resolve a disadvantage of a related technology, this application provides a data reporting method. The method may be applied to a 5th generation mobile communication technology (5th Generation Mobile Communication Technology, 5G) and a subsequent 6th generation mobile communication technology (6th generation mobile networks, 6G), and may be specifically implemented based on a system architecture shown in FIG. 4. As shown in FIG. 4, the system architecture includes a network device and a terminal device. For example, the terminal device may be referred to as a terminal, and may be a device having a wireless transceiver function. The terminal device may be UE. The UE includes but is not limited to a handheld device, a vehicle-mounted device, or a wearable device that has a wireless communication function. For example, the UE may be a mobile phone (mobile phone), a tablet computer, or a computer that has a wireless transceiver function. Alternatively, the terminal device may be a virtual reality (virtual reality, VR) terminal device, an augmented reality (augmented reality, AR) terminal device, a wireless terminal in self-driving, a wireless terminal in telemedicine, a wireless terminal in a smart grid, a wireless terminal in a smart city (smart city), a wireless terminal in a smart home (smart home), or the like. In embodiments of this application, the terminal device may be an apparatus configured to implement a function of the terminal, or may be an apparatus, for example, a chip system, that can support the terminal in implementing the function. The apparatus may be mounted in the terminal. In this embodiment of this application, the chip system may include a chip, or may include a chip and another discrete component.

For example, the network device includes a base station (base station, BS), and the BS may be a device that is deployed in a radio access network and that can perform wireless communication with the terminal device. The base station may be a macro base station, a micro base station, a relay station, an access point, or the like. For example, the base station in this embodiment of this application may be a base station in 5G or an eNB (Evolved NodeB) base station in long term evolution (Long Term Evolution, LTE). The base station in 5G may also be referred to as a transmission reception point (Transmission Reception Point, TRP) or a gNB (Next-Generation NodeB) base station. In embodiments of this application, an apparatus configured to implement a function of the network device may be a network device; or may be an apparatus, for example, a chip system, that can support the network device in implementing the function. The apparatus may be installed in the network device. In embodiments of this application, the technical solutions provided in embodiments of this application are described by using an example in which the apparatus configured to implement the function of the network device is a network device. For example, the network device may be a base station.

Optionally, in some deployments of the network device, the network device may be a central unit (central unit, CU), a distributed unit (distributed unit, DU), or the like. For example, operations or steps of a radio link control (Radio link Control, RLC) layer, a media access control (Media Access Control, MAC) layer, and a radio resource control (Radio Resource Control, RRC) layer may be performed by the CU, and operations or steps of a physical (Physical, PHY) layer may be performed by the DU. In some other deployments of the network device, the CU may be further divided into a CU-control plane (control plane, CP), a CU-user plane (user plane, UP), and the like. In still some other deployments of the network device, the network device may alternatively be an antenna unit (radio unit, RU). In still some other deployments of the network device, the network device may alternatively be an open radio access network (open radio access network, ORAN) architecture or the like. A deployment manner of the network device is not limited in this embodiment of this application. For example, when the network device is of an ORAN architecture, the network device in embodiments of this application may be an access network device in an ORAN, a module in an access network device, or the like. In the ORAN architecture, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU.

The technical solutions provided in this application are described in detail with reference to specific implementations.

FIG. 5 is a schematic flowchart of a data reporting method according to an embodiment of this application. The method may be implemented based on the architecture shown in FIG. 4. As shown in FIG. 5, the method includes steps 501 and 502.

501: A terminal device determines a MAC CE format based on configuration information.

In this embodiment of this application, the configuration information indicates that the terminal device may report a data amount in an LCG by using a parameter in a first BS table. The first BS table is a newly proposed BS table (that is, a new 8-bit BS table). Optionally, the configuration information may indicate that a data amount in at least one LCG of the terminal device may be reported by using a parameter in a first BSR table. Optionally, there may be one or more LCGs. Optionally, there is data that needs to be sent in the at least one LCG. Optionally, the data amount in the LCG in which data needs to be sent is within a range of the first BS table. Optionally, there may be one or more LCGs in which data needs to be sent in the at least one LCG. Content indicated by the configuration information may be properly combined in specific selection logic. For example, the configuration information may indicate that the data amount in the at least one LCG of the terminal device may be reported by using the parameter in the first BSR table, the to-be-sent data in the LCG may be reported by using the parameter in the first BSR table, and the to-be-sent data amount is within the range of the first BS table. For example, the configuration information may indicate that the data amount in the at least one LCG of the terminal device may be reported by using the parameter in the first BSR table, and even if the LCG in which the data needs to be sent is not within a range of the at least one LCG. In this embodiment of this application, when the MAC CE format is a truncated MAC CE format, that the configuration information indicates that the terminal device may report the data amount in the LCG by using the parameter in the first BS table may be understood as follows: The terminal device has a plurality of LCGs having to-be-reported data amounts. However, there are only some LCGs in which a data amount can be reported by using the truncated MAC CE. In this case, at least one of the selected LCGs in which the data amount is reported by using the truncated MAC CE is indicated by a network as an LCG in which the data amount can be reported by using the parameter in the first BS table. Further, optionally, the data amount in the LCG is within a range of the first BS table.

For example, the data amount that needs to be reported in the LCG of the terminal device may include a first data amount or a second data amount. The first data amount is a data amount reported by using a BSR, that is, a data amount corresponding to normal data. A triggered BSR may be a regular BSR, a periodic BSR, or a padding BSR. The second data amount is a data amount reported by using a DSR, that is, a data amount corresponding to emergency data. Alternatively, the second data amount means that a remaining time to expiration of the data is within a time range, and the time range includes one or two time thresholds. If the time range includes one time threshold, a remaining time of to expiration of the data of the second data amount is less than or equal to the time threshold. If the time range includes two time thresholds, for example, T1 and T2, and T1>T2, a remaining time to expiration of a second amount needs to be greater than or equal to T2 and less than or equal to T1. In other words, the second data amount may include a data amount of data corresponding to a service data unit (Service Data Unit, SDU) or a part of the SDU that is deleted by an RLC layer indicated by a packet data convergence protocol (Packet Data Convergence Protocol, PDCP) layer, where the SDU or the part of the SDU has been transferred to a lower layer. Alternatively, the second data amount may be understood as including a data amount of data corresponding to an SDU or a part of the SDU that is deleted by the RLC layer indicated by the PDCP layer because an associated PDCP discard timer expires.

For example, if the terminal device has an LCG (including one or more LCGs) having a first to-be-reported data amount, the terminal device determines, based on the configuration information, that the MAC CE format is a first format. The first format is the MAC CE format shown in FIG. 3. As shown in FIG. 3, a BSR MAC CE corresponding to the first format includes an LCG ID indication field, where the LCG ID indication field indicates an identifier of the LCG in which the first data amount needs to be reported. The BSR MAC CE corresponding to the first format further includes a first indication field and a second indication field. The first indication field indicates the first data amount corresponding to the LCG, that is, a buffer size field. The second indication field indicates that information in the first indication field is represented by using the parameter (that is, an index) in the first BS table or represented by using a parameter (that is, an index) in the second BS table, that is, a BTᵢ field. For example, BT₁=1 may indicate that the index in the first BS table is used as a parameter in a buffer size corresponding to an LCG₁. The second BS table is an old BS table, and a range indicated by the index in the first BS table is different from a range indicated by the index in the second BS table. To be specific, the range indicated by the index in the first BS table is finer than the range indicated by the index in the second BS table.

For example, the first format includes an enhanced (Enhanced) BSR format or an enhanced (Enhanced) long (Long) BSR format, which may also be referred to as an extended BSR format or an extended long BSR format, an expanded BSR format or an expanded long BSR format, or the like. The first format may be represented in a standard text as follows.

| | | |
|---|---|---|
| 0> If at least one LCG in UE is configured to be available for a new BS table | | |
| | 1> If there are a plurality of LCGs having to-be-reported data: | |
| | | 2> The enhanced [Long] BSR is used; |
| | 1> If there is only one LCG having to-be-reported data: | |
| | | 2> The enhanced [Long] BSR is used; |
| 0> Otherwise, a conventional rule is used, that is: | | |
| | 1> If there are a plurality of LCGs having to-be-reported data: | |
| | | 2> The long BSR is used; |
| | 1> If there is only one LCG having to-be-reported data: | |
| | | 2> The short BSR is used; |

In this implementation, the terminal device may select the first format based on the configuration information to report the BSR. In the first format, an index in the first BS table may indicate the data amount in a buffer size, or an index in the second BS table may indicate the data amount in a buffer size. A manner of reporting the data amount is flexible. In addition, when the index in the first BS table indicates the data amount in the buffer size in the first format, both a new BS table and a new MAC CE format are used. This helps implement finer-granularity reporting of the data amount, and reporting is more reasonable.

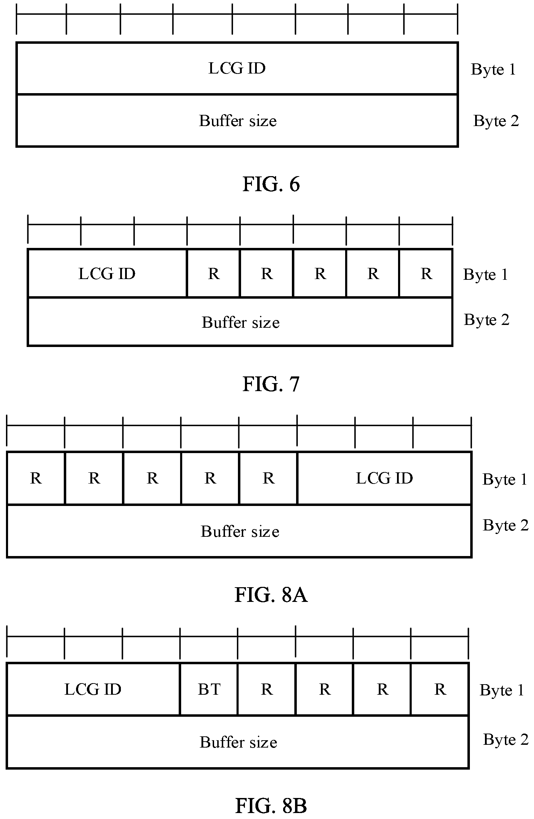

For example, if the terminal device has only one LCG having a first to-be-reported data amount, the terminal device determines, based on the configuration information, that the MAC CE format is a second format, where a BSR MAC CE corresponding to the second format includes a first indication field, the first indication field indicates the first data amount corresponding to the LCG, and information in the first indication field may be represented by using the parameter in the first BS table. For example, the second format may be any one of the MAC CE formats shown in FIG. 6 to FIG. 8A. Any one of the MAC CE formats shown in FIG. 6 to FIG. 8A uses two bytes. In the MAC CE format shown in FIG. 6, a first byte indicates an LCG ID, a second byte indicates the first data amount corresponding to the LCG, and the first data amount is indicated by using an index in a new BS table. In the MAC CE format shown in FIG. 7, the first byte indicates an LCG ID and a reserved (reserved) bit R, the second byte indicates the first data amount corresponding to the LCG, and the first data amount is indicated by using an index in a new BS table. In the MAC CE format shown in FIG. 8A, the first byte also indicates an LCG ID and a reserved bit R, the second byte indicates the first data amount corresponding to the LCG, and the first data amount is indicated by using an index in a new BS table. Optionally, the BSR MAC CE corresponding to the second format may further include a second indication field, that is, a "BT" field. For example, the "BT" field is added to any one of the MAC CE formats shown in FIG. 6 to FIG. 8A. For example, the "BT" field is located after the LCG ID in FIG. 8B. Optionally, the information in the first indication field may be represented by using the parameter in the first BS table, or may be represented by using the parameter in the second BS table. When the BSR MAC CE corresponding to the second format includes the second indication field, the second indication field indicates that the information in the first indication field is represented by using the parameter in the first BS table or represented by using the parameter in the second BS table.

For example, a MAC subheader of the BSR MAC CE corresponding to the second format includes a third indication field, and the third indication field indicates that the BSR MAC CE is a BSR MAC CE of a second format type. The third indication field may be an LCID or an eLCID. Optionally, an LCID or an eLCID is newly defined in an outer MAC subheader of the BSR MAC CE corresponding to the second format, to indicate that a subsequent MAC CE is in the second format. For example, the second format includes an enhanced short BSR format or an enhanced short truncated BSR format, which may also be referred to as an extended short BSR format or an extended short truncated BSR format, an expanded short BSR format or an expanded short truncated BSR format, or the like. The first format may be represented in a standard text as follows.

| | | |
|---|---|---|
| 0> If at least one LCG in UE is configured to be available for a new table | | |
| | 1> If there are a plurality of LCGs having to-be-reported data: | |
| | | 2> The enhanced [Long] BSR is used; |
| | | 1> If there is only one LCG having to-be-reported data: |
| | | 2> The enhanced short BSR is used; |
| 0> Otherwise, a conventional rule is used, that is: | | |
| | 1> If there are a plurality of LCGs having to-be-reported data: | |
| | | 2> The long BSR is used; |
| | 1> If there is only one LCG having to-be-reported data: | |
| | | 2> The short BSR is used; |

The LCID or the eLCID may be represented by using a parameter (for example, an index) in Table 3.

**Table 3**

| Codepoint (Codepoint) | Index | LCID or eLCID value |
|---|---|---|
| 0 to 226 | 64 to 289 | Reserved reserved |
| 227 | 290 | Enhanced BSR (Enhanced (Long) BSR) |
| 228 | 291 | Enhanced short BSR (Enhanced Short BSR) |
| 229 | 292 | Enhanced short truncated BSR (Enhanced Short Truncated BSR) |

It should be noted that Table 3 is merely an example, and does not limit the LCID or the eLCID in this embodiment of this application.

In this implementation, the new MAC CE format is introduced. The terminal device may select, based on the configuration information, the second format to report the BSR. In the second format, an index in the first BS table indicates the data amount in a buffer size. This helps implement finer-granularity reporting of the data amount. In addition, compared with an existing MAC CE format, the new MAC CE format uses a fixed length of two bytes, so that overheads of reporting the data amount can be reduced, thereby improving a gain of reporting the BSR.

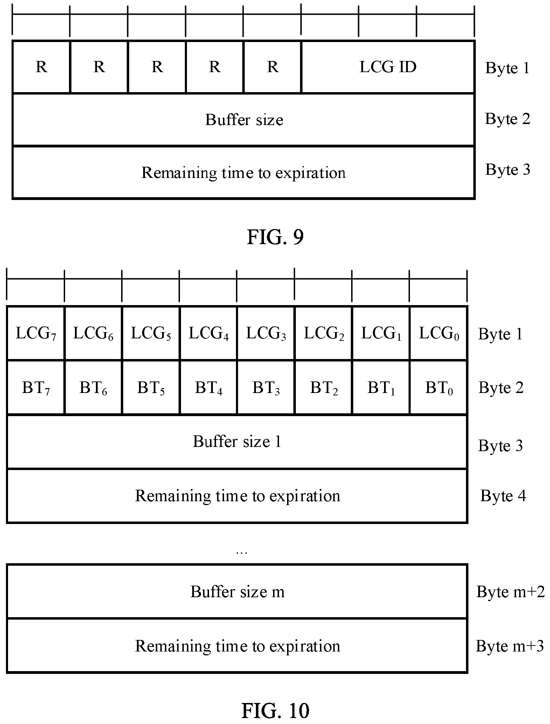

For example, if the terminal device has an LCG having a second to-be-reported data amount, the terminal device may also determine the MAC CE format based on the configuration information. A DSR MAC CE corresponding to the MAC CE format includes a fourth indication field and a fifth indication field. The fourth indication field indicates a second data amount that needs to be reported in a corresponding LCG, and the fifth indication field indicates a remaining time to expiration of data corresponding to the second data amount. For example, the fourth indication field may be a buffer size field. For example, as shown in FIG. 9, if the terminal device has one LCG having a second to-be-reported data amount, the MAC CE format may be that a remaining time to expiration of the data corresponding to the second data amount is added after each buffer size in the second format. In other words, the fifth indication field may be a remaining time field of the emergency data buffered in the corresponding LCG, and the remaining time field indicates a remaining time to expiration of the data. For example, as shown in FIG. 10, if the terminal device has a plurality of LCGs having second to-be-reported data amounts, the MAC CE format may be that a remaining time to expiration of data corresponding to the second data amount is added after each buffer size in the first format. For example, the MAC CE format may be that a remaining time to expiration of the data corresponding to the second data amount is added after each buffer size in the short BSR format or the long BSR format, or the like.

In this implementation, when reporting a data amount of emergency data, the terminal device may select, based on the configuration information, a parameter in a new BS table to report the data amount, and may select a new MAC CE format like an enhanced BSR format, an enhanced long BSR format, an enhanced short BSR format, or an enhanced short truncated BSR format to report the DSR, thereby implementing more reasonable and finer-granularity reporting of the data amount. Certainly, the terminal device may alternatively select a conventional MAC CE format to report the DSR, and a reporting manner is flexible.

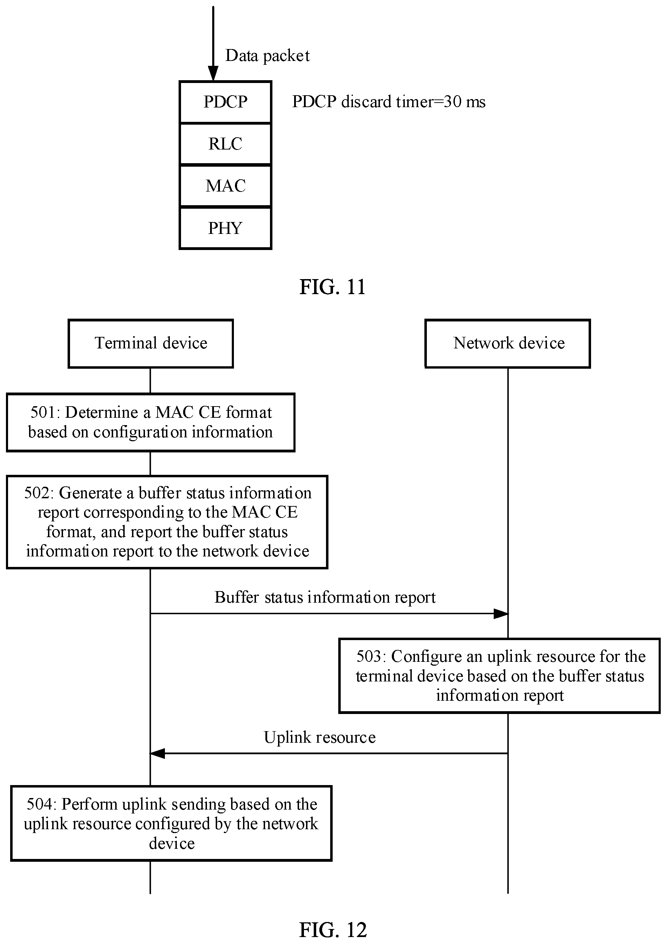

It should be understood that the remaining time to expiration of the data corresponding to the second data amount is a value of a PDCP discard timer (discard timer) corresponding to the data at the PDCP layer. As shown in FIG. 11, when the PDCP layer receives a data packet from an upper layer, the PDCP layer starts a timer for the data packet. An initial value (for example, 30 ms) of the timer is obtained by deducting a delay budget (delay budget) of the packet. When the value is deducted to 0, it indicates that the data packet has expired. In this case, the PDCP layer clears the data packet from the buffer and indicates the data packet to a lower-layer RLC layer. The data packet may already be being processed at the RLC layer. After receiving a packet loss indication from the PDCP layer, the RLC layer usually deletes a protocol data unit (Protocol Data Unit, PDU) corresponding to the data packet at the RLC layer. The PDU is an SDU relative to the RLC layer. However, in an RLC acknowledged mode (acknowledged mode, AM) and the RLC unacknowledged mode (unacknowledged mode, UM), even if the PDCP layer indicates the RLC layer to discard a packet, the RLC layer cannot delete or discard the corresponding SDU. For example, in a retransmission scenario in the RLC AM mode, the corresponding SDU has been delivered to a lower layer; or in a segmentation scenario in the RLC UM mode, at least one segment of the corresponding SDU has been delivered to a lower layer. In these scenarios, the terminal device still needs to generate, by using the determined MAC CE format, the DSR of the data corresponding to the SDU, and report a data amount of the data corresponding to the SDU. That is, the data corresponding to the second data amount that is reported by the terminal device needs to include the data corresponding to the SDU that is deleted by the RLC layer indicated by the PDCP layer. When the DSR is reported, if the data corresponding to the SDU or the at least one segment of the SDU has been delivered to a lower layer, the terminal device may set a remaining time of the fifth indication field to 0 in the DSR MAC CE corresponding to the determined MAC CE format. Alternatively, the terminal device may select a minimum value from a remaining time to expiration of at least one piece of target data, and set the fifth indication field to the minimum value in the DSR MAC CE corresponding to the determined MAC CE format. The at least one piece of target data is data other than the SDU or the at least one segment of the SDU in the data corresponding to the second data amount. For example, in addition to the SDU that the PDCP layer indicates to delete, the terminal device further needs to report data amounts of data corresponding to an SDU 1 and an SDU 2. In this case, a minimum value may be selected from remaining times to expiration of the data corresponding to the SDU 1 and the SDU 2 (for example, a remaining time to expiration of the data corresponding to the SDU 1 is the smallest, and is 3 ms), and a remaining time to expiration of the data corresponding to the SDU that the PDCP layer indicates the RLC layer to discard is set to 3 ms. For example, the terminal device may further report, by using the BSR, the data amount of the data corresponding to the SDU or at least one segment of the SDU that the PDCP layer indicates to discard, that is, the terminal device does not report the SDU or the at least one segment of the SDU by using the DSR, that is, the data amount is not reported as the data amount of the emergency data.

It should be understood that if there is no at least one piece of target data, the triggered DSR is canceled.

For example, the delay budget may also be replaced with a PDU set delay budget (PDU Set Delay Budget, PSDB) or a packet delay budget (Packet Delay Budget, PDB). This does not affect the essence of the present invention.

It should be noted that, if the network device side has received the SDU sent by the terminal device and has returned acknowledgment information to the terminal device, the PDCP layer may also deliver a deletion indication of the SDU to the RLC layer. In this case, if the discard timer of the data corresponding to the SDU does not expire, the remaining time of the fifth indication field is a value corresponding to the discard timer. For example, if the discard timer is left with 10 ms, the remaining time of the fifth indication field is 10 ms.

In this implementation, the PDCP layer indicates the RLC layer to delete the data corresponding to the SDU because the discard timer expires, but the terminal device may still use the DSR to report the data amount of the data, and set a remaining time to expiration for the data, so that the data can be normally processed and sent to a network side. This helps ensure that emergency data is not discarded, and further ensures data integrity. Optionally, the terminal device may also report, by using the BSR, the data corresponding to the SDU or the at least one segment of the SDU, to ensure that the data is not discarded.

502: The terminal device generates a buffer status information report corresponding to the MAC CE format and reports the buffer status information report to the network device.

In this embodiment of this application, after determining the corresponding MAC CE format based on the configuration information, the terminal device generates a buffer status information report corresponding to the format, for example, a BSR or a DSR, and sends the buffer status information report to the network device.

Optionally, as shown in FIG. 12, the method may further include steps 503 and 504.

503: The network device configures an uplink resource for the terminal device based on the buffer status information report.

504: The terminal device performs uplink sending based on the uplink resource configured by the network device.

Compared with the network device, when the terminal device reports the buffer status of the LCG in a more refined manner, the network device may allocate resources to the terminal device in a more refined manner, thereby implementing refined scheduling.

It can be learned that, in this embodiment of this application, the terminal device may determine the corresponding MAC CE format based on the configuration information. The MAC CE format may be a conventional MAC CE format, or may be a newly defined MAC CE format. In the newly defined MAC CE format, an index in the first BS table may be used to report the buffered data amount. Because the index in the first BS table is more finely divided, the terminal device can implement finer-granularity BSR reporting, and BSR reporting is more reasonable.

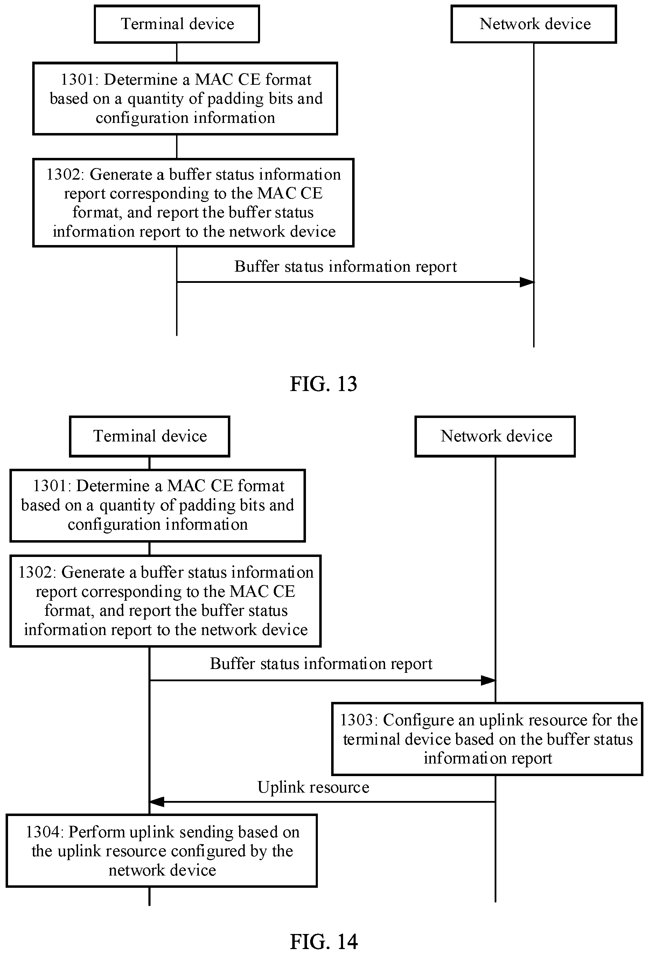

FIG. 13 is a schematic flowchart of another data reporting method according to an embodiment of this application. The method may be implemented based on the architecture shown in FIG. 4. As shown in FIG. 13, the method includes steps 1301 and 1302.

1301: The terminal device determines a MAC CE format based on a quantity of padding bits and configuration information.

In this embodiment of this application, the configuration information indicates that the terminal device may report a data amount in an LCG by using a parameter in a first BS table. Optionally, the configuration information may indicate that a data amount in at least one LCG of the terminal device may be reported by using a parameter in a first BSR table. Optionally, there may be one or more LCGs. Optionally, there is data that needs to be sent in the at least one LCG. Optionally, the data amount in the LCG in which data needs to be sent is within a range of the first BS table. Optionally, there may be one or more LCGs in which data needs to be sent in the at least one LCG. Content indicated by the configuration information may be properly combined in specific selection logic. For example, the configuration information may indicate that the data amount in the at least one LCG of the terminal device may be reported by using the parameter in the first BSR table, the to-be-sent data in the LCG may be reported by using the parameter in the first BSR table, and the to-be-sent data amount is within the range of the first BS table. For example, the configuration information may indicate that the data amount in the at least one LCG of the terminal device may be reported by using the parameter in the first BSR table, and even if the LCG in which the data needs to be sent is not within a range of the at least one LCG. In this embodiment of this application, when the MAC CE format is a truncated MAC CE format, that the configuration information indicates that the terminal device may report the data amount in the LCG by using the parameter in the first BS table may be understood as follows: The terminal device has a plurality of LCGs having to-be-reported data amounts. However, there are only some LCGs in which a data amount can be reported by using the truncated MAC CE. In this case, at least one of the selected LCGs in which the data amount is reported by using the truncated MAC CE is indicated by a network as an LCG in which the data amount can be reported by using the parameter in the first BS table. Further, optionally, the data amount in the LCG is within a range of the first BS table.

A BSR MAC CE corresponding to a first format includes an LCG ID indication field, where the LCG ID indication field indicates an identifier of an LCG in which a first data amount needs to be reported. The BSR MAC CE corresponding to the first format further includes a first indication field and a second indication field. The first indication field indicates the first data amount corresponding to the LCG, that is, a buffer size field. The second indication field indicates that information in the first indication field is represented by using a parameter (that is, an index) in the first BS table or represented by using a parameter (that is, an index) in the second BS table, that is, a "BTᵢ" field. For example, the first format includes an enhanced BSR format or an enhanced long BSR format.

For example, the data amount that needs to be reported in the LCG of the terminal device may include a first data amount or a second data amount. The first data amount is a data amount reported by using a BSR, that is, a data amount corresponding to normal data, and a triggered BSR may be a padding BSR. The second data amount is a data amount reported by using a DSR, that is, a data amount corresponding to emergency data.

For example, in terms of reporting the BSR, if the terminal device has an LCG having a first to-be-reported data amount, and a quantity of padding bits (padding bits) is greater than or equal to a sum of a size of the BSR MAC CE corresponding to the first format and a size of a MAC subheader of the BSR MAC CE corresponding to the first format, the terminal device determines, based on the configuration information, that the MAC CE format is the first format. For details about the first format, refer to the description shown in FIG. 3. The first format may be represented in a standard text as follows.

| | | | |
|---|---|---|---|
| 0> If at least one LCG in UE is configured to be available for a new BS table | | | |
| | 1> If the UE has one or more LCGs having to-be-reported data | | |
| | | 2> If a quantity of padding bits>=the enhanced (Long) BSR+the MAC subheader | |
| | | | 3> The enhanced (Long) BSR is used; |

In this implementation, the terminal device compares the quantity of padding bits with the size of the BSR MAC CE corresponding to the first format, and may select the first format to report the BSR. In the first format, an index in the first BS table may indicate the data amount in a buffer size, or an index in the second BS table may indicate the data amount in a buffer size. A manner of reporting the data amount is flexible. In addition, when the index in the first BS table indicates the data amount in the buffer size in the first format, both a new BS table and a new MAC CE format are used. This helps implement finer-granularity reporting of the data amount, and reporting is more reasonable.

For example, if the terminal device has a plurality of LCGs having first to-be-reported data amounts, and the quantity of padding bits is greater than or equal to a sum of two bytes and a size of a MAC subheader of a long BSR MAC CE, and is less than a sum of three bytes and a size of a MAC subheader of a BSR MAC CE corresponding to a first format, the terminal device determines, based on the configuration information, that the MAC CE format is a long truncated BSR format. The long truncated BSR format is a truncated type of the MAC CE format shown in FIG. 2. The first format may be represented in a standard text as follows.

| | | | |
|---|---|---|---|
| 0> If at least one LCG in UE is configured to be available for a new BS table | | | |
| | 1> If 2 bytes+a long BSR MAC subheader<=a quantity of padding bits<3 bytes+an enhanced (Long) BSR MAC subheader | | |
| | | 2> If there are a plurality of LCGs having to-be-reported data | |
| | | | 3> The long truncated BSR is used; |

The three bytes are bytes of the first data amount corresponding to at least one LCG plus the first indication field and the second indication field. The two bytes are bytes of the first data amount corresponding to one LCG plus the first indication field.

It should be noted that, when the quantity of padding bits and the size of the MAC CE are compared, it needs to be ensured that the two to-be-compared parties are in a same unit. For example, in the foregoing description of the comparison, a unit of the quantity of padding bits may be understood as a quantity of bits, and a unit of the three bytes compared with the quantity of padding bits cannot be 3, but needs to be converted into a quantity in the same unit of bits, that is, 3 bytesx8 bits=24 bits.

In this implementation, when the quantity of padding bits is greater than or equal to the sum of the two bytes and the size of the MAC subheader of the long BSR MAC CE, and is less than the sum of the three bytes and the size of the MAC subheader of the BSR MAC CE corresponding to the first format, and there are a plurality of LCGs having to-be-sent data, the terminal device may report the data amounts in the long truncated BSR format, so that buffer statuses of the LCGs can be reported as much as possible.

For example, if the terminal device has a plurality of LCGs having first to-be-reported data amounts, the quantity of padding bits is greater than or equal to a sum of the three bytes and the size of the MAC subheader of the BSR MAC CE corresponding to the first format, and is less than a sum of the size of the BSR MAC CE corresponding to the first format and the size of the MAC subheader of the BSR MAC CE corresponding to the first format, the terminal device determines, based on the configuration information, that the MAC CE format is the third format, where the third format is a truncated type of the first format. For example, the third format may be an enhanced truncated BSR format or an enhanced long truncated BSR format. The first format may be represented in a standard text as follows.

| | | | |
|---|---|---|---|
| 0> If at least one LCG in UE is configured to be available for a new BS table | | | |
| | 1> If 3 bytes+an enhanced (Long) BSR MAC subheader<=a quantity of padding bits<an enhanced (Long) BSR+a MAC subheader | | |
| | | 2> If the UE has a plurality of LCGs having to-be-reported data | |
| | | | 3> The enhanced (Long) truncated BSR is used; |

In this implementation, when the quantity of padding bits is greater than or equal to the sum of the three bytes and the size of the MAC subheader of the BSR MAC CE corresponding to the first format, and is less than the sum of the size of the BSR MAC CE corresponding to the first format and the size of the MAC subheader of the BSR MAC CE corresponding to the first format, the terminal device may report the data amount by using the truncated type (that is, the third format) of the first format. In the third format, an index in the first BS table may indicate the data amount in a buffer size, or an index in the second BS table may indicate the data amount in a buffer size. A manner of reporting the data amount is flexible. In addition, when the index in the first BS table indicates the data amount in the buffer size in the third format, both a new BS table and a new MAC CE format are used. This helps implement finer-granularity reporting of the data amount, and reporting is more reasonable.

For example, if the quantity of padding bits is less than the sum of two bytes and the size of the MAC subheader of the long BSR MAC CE, and the terminal device has a plurality of LCGs having first to-be-reported data amounts, the terminal device determines that the MAC CE format is the short truncated BSR format. Optionally, when the terminal device has a plurality of LCGs having to-be-reported buffer statuses, the terminal device may select, based on priorities of the plurality of LCGs, an LCG with a highest priority, and report a buffer status of the LCG. If the quantity of padding bits is less than the sum of two bytes and the size of the MAC subheader of the long BSR MAC CE, and the terminal device has one LCG having a first to-be-reported data amount, the terminal device determines that the MAC CE format is the short BSR format. For the short truncated BSR format and the short BSR format, refer to the descriptions shown in FIG. 1. The first format may be represented in a standard text as follows.

| | | | | |
|---|---|---|---|---|
| 0> If at least one LCG in UE is configured to be available for a new BS table | | | | |
| | 1> If the quantity of padding bits<2 bytes+the long BSR MAC subheader | | | |
| | | 2> If there are a plurality of LCGs having to-be-reported data | | |
| | | | 3> The short truncated BSR is used; | |
| | | 2> If there is one LCG having to-be-reported data | | |
| | | | | 3> The short BSR is used; |

In this implementation, when the quantity of padding bits is less than the sum of two bytes and the size of the MAC subheader of the long BSR MAC CE, the terminal device may determine, based on the quantity of LCGs in which the data is to be reported, to use the short truncated BSR format or the short BSR format.

For example, in terms of reporting the DSR, the terminal device may also determine the MAC CE format based on the quantity of padding bits and the configuration information. A DSR MAC CE corresponding to the MAC CE format includes a fourth indication field and a fifth indication field. The fourth indication field indicates a second data amount that needs to be reported in a corresponding LCG, and the fifth indication field indicates a remaining time to expiration of data corresponding to the second data amount. For example, the fourth indication field may be a buffer size field. For example, if the terminal device has one LCG having a second to-be-reported data amount, the MAC CE format may be that a remaining time to expiration of the data corresponding to the second data amount is added after the buffer size of the DSR MAC CE corresponding to the short BSR format. In other words, the fifth indication field may be a remaining time field of the emergency data buffered in the corresponding LCG, and the remaining time field indicates the remaining time to expiration of the data, and the like.

In this implementation, when reporting a data amount of emergency data, the terminal device may select, based on the configuration information, a parameter in a new BS table to report the data amount, and may select a new MAC CE format like an enhanced BSR format, an enhanced long BSR format, an enhanced truncated BSR format, or an enhanced long truncated BSR format to report the DSR, thereby implementing more reasonable and finer-granularity reporting of the data amount. Certainly, the terminal device may alternatively select a conventional MAC CE format to report the DSR, and a reporting manner is flexible.

For example, the data corresponding to the second data amount reported by the terminal device includes data corresponding to the SDU that is deleted by the RLC layer indicated by the PDCP layer. The PDCP layer indicates, when a discard timer of the data corresponding to the SDU expires, the RLC layer to delete the SDU. When the DSR is reported, if the data corresponding to the SDU or the at least one segment of the SDU has been delivered to a lower layer, the terminal device may set the fifth indication field to 0 in the DSR MAC CE corresponding to the determined MAC CE format. Alternatively, the terminal device may select a minimum value from a remaining time to expiration of at least one piece of target data, and set the fifth indication field to the minimum value in the DSR MAC CE corresponding to the determined MAC CE format. The at least one piece of target data is data other than the SDU or the at least one segment of the SDU in the data corresponding to the second data amount. For example, in addition to the SDU that the PDCP layer indicates to delete, the terminal device further needs to report the data amounts of the data corresponding to the SDU 1 and the SDU 2. In this case, the terminal device may select a minimum value from the remaining times to the expiration of the data corresponding to the SDU 1 and the SDU 2, and set the minimum value to the remaining time to expiration of the data corresponding to the SDU that the PDCP layer indicates the RLC layer to discard. For example, the terminal device may further report, by using the BSR, the data amount of the data corresponding to the SDU or at least one segment of the SDU that the PDCP layer indicates to discard, that is, the terminal device does not report the SDU or the at least one segment of the SDU by using the DSR, that is, the data amount is not reported as the data amount of the emergency data. It should be understood that if there is no at least one piece of target data, the triggered DSR is canceled.

In this implementation, the PDCP layer indicates the RLC layer to delete the data corresponding to the SDU because the discard timer expires, but the terminal device may still use the DSR to report the data amount of the data, and set a remaining time to expiration for the data, so that the data can be normally processed and sent to a network side. This helps ensure that emergency data is not discarded, and further ensures data integrity. Optionally, the terminal device may also report, by using the BSR, the data corresponding to the SDU or the at least one segment of the SDU, to ensure that the data is not discarded.

1302: The terminal device generates a buffer status information report corresponding to the MAC CE format and reports the buffer status information report to the network device.

In this embodiment of this application, the terminal device may determine a corresponding MAC CE format based on the quantity of padding bits and the size of the buffer status information report corresponding to the first format, generate the buffer status information report corresponding to the format, for example, a BSR or a DSR, and send the buffer status information report to the network device.

Optionally, as shown in FIG. 14, the method may further include steps 1303 and 1304.

1303: The network device configures an uplink resource for the terminal device based on the buffer status information report.

1304: The terminal device performs uplink sending based on the uplink resource configured by the network device.

Compared with the network device, when the terminal device reports the buffer status of the LCG in a more refined manner, the network device may allocate resources to the terminal device in a more refined manner, thereby implementing refined scheduling.

It can be learned that, in this embodiment of this application, the terminal device may determine the corresponding MAC CE format based on the quantity of padding bits and the configuration information. The MAC CE format may be a conventional MAC CE format, or may be a newly defined MAC CE format. In the newly defined MAC CE format, an index in the first BS table may be used to report the buffered data amount. Because the index in the first BS table is more finely divided, the terminal device can implement finer-granularity BSR reporting, and BSR reporting is more reasonable.

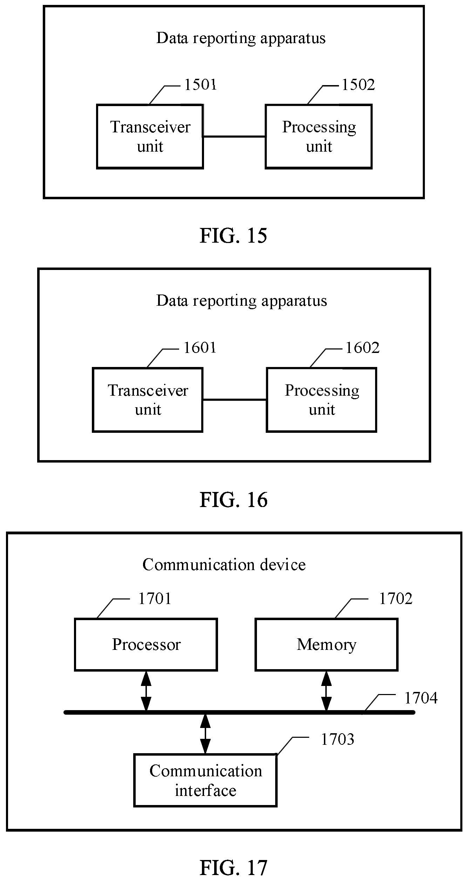

FIG. 15 is a diagram of a structure of a data reporting apparatus according to an embodiment of this application. As shown in FIG. 15, the apparatus may include: a transceiver unit 1501 and a processing unit 1502.

The processing unit 1502 is configured to: determine a media access control MAC control element CE format based on configuration information, where the configuration information indicates a terminal device to report a data amount in a logical channel group LCG by using a parameter in a first BS table; and generate a buffer status information report corresponding to the MAC CE format.

The transceiver unit 1501 is configured to report the buffer status information report.

It can be learned that, in the apparatus shown in FIG. 15, the corresponding MAC CE format may be determined based on the configuration information. The MAC CE format may be a conventional MAC CE format, or may be a newly defined MAC CE format. In the newly defined MAC CE format, an index in the first BS table may be used to report the buffered data amount. Because the index in the first BS table is more finely divided, the terminal device can implement finer-granularity BSR reporting, and BSR reporting is more reasonable.

In a possible implementation, the buffer status information report includes a buffer status report BSR; and in the aspect of determining the media access control MAC control element CE format based on the configuration information, the processing unit 1502 is specifically configured to:
if the terminal device has an LCG having a first to-be-reported data amount, determine, based on the configuration information, that the MAC CE format is a first format, where a BSR MAC CE corresponding to the first format includes a first indication field and a second indication field, the first indication field indicates the first data amount corresponding to the LCG, and the second indication field indicates that information in the first indication field is represented by using the parameter in the first BS table or represented by using a parameter in a second BS table.

In a possible implementation, the buffer status information report includes a buffer status report BSR; and in the aspect of determining the media access control MAC control element CE format based on the configuration information, the processing unit 1502 is specifically configured to:
if the terminal device has only one LCG having a first to-be-reported data amount, determine, based on the configuration information, that the MAC CE format is a second format, where a BSR MAC CE corresponding to the second format includes a first indication field, the first indication field indicates the first data amount corresponding to the LCG, and information in the first indication field is represented by using the parameter in the first BS table.

In a possible implementation, a MAC subheader of the BSR MAC CE corresponding to the second format includes a third indication field, and the third indication field indicates that the BSR MAC CE is a BSR MAC CE of a second format type.

In a possible implementation, the first format includes an enhanced BSR format or an enhanced long BSR format.

In a possible implementation, the second format includes an enhanced short BSR format or an enhanced short truncated BSR format.

In a possible implementation, the BSR is a regular Regular BSR or a periodic periodic BSR.

In a possible implementation, the buffer status information report includes a delay status report DSR, a DSR MAC CE corresponding to the MAC CE format includes a fourth indication field and a fifth indication field, the fourth indication field indicates a second data amount that needs to be reported in the corresponding LCG, and the fifth indication field indicates a remaining time to expiration of data corresponding to the second data amount.

In a possible implementation, the data corresponding to the second data amount includes data corresponding to a service data unit SDU that is deleted by a radio link control RLC layer indicated by a packet data convergence protocol PDCP layer, and the PDCP layer indicates, when a discard timer of the data corresponding to the SDU expires, the RLC layer to delete the SDU, where
if the data corresponding to the SDU or at least one segment of the SDU has been delivered to a lower layer, a remaining time to expiration of the data corresponding to the SDU or the at least one segment of the SDU is 0; or a remaining time to expiration of the data corresponding to the SDU or the at least one segment of the SDU is a minimum value in a remaining time to expiration of at least one piece of target data, where the at least one piece of target data is data other than the SDU or the at least one segment of the SDU in the data corresponding to the second data amount; or a data amount of the data corresponding to the SDU or at least one segment of the SDU is reported by using a BSR.

It should be noted that, for implementations of the units described in FIG. 15, reference may be made to corresponding descriptions of the embodiments shown in FIG. 5 to FIG. 12. In addition, for beneficial effects brought by the data reporting apparatus described in FIG. 15, refer to corresponding descriptions of the embodiments shown in FIG. 5 to FIG. 12. Details are not described herein again.

FIG. 16 is a diagram of a structure of another data reporting apparatus according to an embodiment of this application. As shown in FIG. 16, the apparatus may include: a transceiver unit 1601 and a processing unit 1602.

The processing unit 1602 is configured to: determine a media access control MAC control element CE format based on configuration information; generate a buffer status information report corresponding to the MAC CE format, where the configuration information indicates a terminal device to report a data amount in a logical channel group LCG by using a parameter in a first BS table.

The transceiver unit 1601 is configured to report the buffer status information report.

It can be learned that, in the apparatus shown in FIG. 16, a corresponding MAC CE format may be determined based on the quantity of padding bits and the configuration information. The MAC CE format may be a conventional MAC CE format, or may be a newly defined MAC CE format. In the newly defined MAC CE format, an index in the first BS table may be used to report the buffered data amount. Because the index in the first BS table is more finely divided, the terminal device can implement finer-granularity BSR reporting, and BSR reporting is more reasonably.

In a possible implementation, the buffer status information report includes a buffer status report BSR; and in the aspect of determining the media access control MAC control element CE format based on the quantity of padding bits and the configuration information, the processing unit 1602 is specifically configured to:
if the terminal device has an LCG having a first to-be-reported data amount, and the quantity of padding bits is greater than or equal to a sum of a size of a BSR MAC CE corresponding to a first format and a size of a MAC subheader of the BSR MAC CE corresponding to the first format, determine, based on the configuration information, that the MAC CE format is the first format, where the BSR MAC CE corresponding to the first format includes a first indication field and a second indication field, the first indication field indicates the first data amount that needs to be reported in the corresponding LCG, and the second indication field indicates that information in the first indication field is represented by using the parameter in the first BS table or a parameter in a second BS table.

In a possible implementation, the buffer status information report includes a buffer status report BSR; and in the aspect of determining the media access control MAC control element CE format based on the quantity of padding bits and the configuration information, the processing unit 1602 is specifically configured to:
if the terminal device has a plurality of LCGs having first to-be-reported data amounts, the quantity of padding bits is greater than or equal to a sum of three bytes and the size of the MAC subheader of the BSR MAC CE corresponding to the first format, and is less than a sum of the size of the BSR MAC CE corresponding to the first format and the size of the MAC subheader of the BSR MAC CE corresponding to the first format, determine, based on the configuration information, that the MAC CE format is the third format, where the third format is a truncated type of the first format.

In a possible implementation, the buffer status information report includes a buffer status report BSR; and in the aspect of determining the media access control MAC control element CE format based on the quantity of padding bits and the configuration information, the processing unit 1602 is specifically configured to:
if the terminal device has a plurality of LCGs having first to-be-reported data amounts, and the quantity of padding bits is greater than or equal to a sum of two bytes and a size of a MAC subheader of a long BSR MAC CE, and is less than a sum of three bytes and a size of a MAC subheader of a BSR MAC CE corresponding to a first format, determine, based on the configuration information, that the MAC CE format is a long truncated BSR format.

In a possible implementation, the buffer status information report includes a buffer status report BSR; and in the aspect of determining the media access control MAC control element CE format based on the quantity of padding bits and the configuration information, the processing unit 1602 is specifically configured to:
if the quantity of padding bits is less than a sum of two bytes and a size of a MAC subheader of a long BSR MAC CE, and the terminal device has a plurality of LCGs having first to-be-reported data amounts, determine, based on the configuration information, that the MAC CE format is a short truncated BSR format; or
if the quantity of padding bits is less than a sum of two bytes and a size of a MAC subheader of a long BSR MAC CE, and the terminal device has one LCG having the first to-be-reported data amount, determine, based on the configuration information, that the MAC CE format is a short BSR format.

In a possible implementation, the first format includes an enhanced BSR format or an enhanced long BSR format.

In a possible implementation, the buffer status information report includes a delay status report DSR, a DSR MAC CE corresponding to the MAC CE format includes a fourth indication field and a fifth indication field, the fourth indication field indicates a second data amount that needs to be reported in the corresponding LCG, and the fifth indication field indicates a remaining time to expiration of data corresponding to the second data amount.

In a possible implementation, the data corresponding to the second data amount includes data corresponding to a service data unit SDU that is deleted by a radio link control RLC layer indicated by a packet data convergence protocol PDCP layer, and the PDCP layer indicates, when a discard timer of the data corresponding to the SDU expires, the RLC layer to delete the SDU, where
if the data corresponding to the SDU or at least one segment of the SDU has been delivered to a lower layer, a remaining time to expiration of the data corresponding to the SDU or the at least one segment of the SDU is 0; or a remaining time to expiration of the data corresponding to the SDU or the at least one segment of the SDU is a minimum value in a remaining time to expiration of at least one piece of target data, where the at least one piece of target data is data other than the SDU or the at least one segment of the SDU in the data corresponding to the second data amount; or a data amount of the data corresponding to the SDU or at least one segment of the SDU is reported by using a buffer status report BSR.

It should be noted that, for implementations of the units described in FIG. 16, reference may be made to corresponding descriptions of the embodiments shown in FIG. 13 and FIG. 14. In addition, for beneficial effects brought by the data reporting apparatus described in FIG. 16, refer to corresponding descriptions of the embodiments shown in FIG. 13 and FIG. 14. Details are not described herein again.

Based on the descriptions of the foregoing method embodiments and the foregoing apparatus embodiments, an embodiment of this application further provides a communication device. FIG. 17 is a diagram of a structure of a communication device according to an embodiment of this application. The communication device at least includes a processor 1701, a memory 1702, and a communication interface 1703. The processor 1701, the memory 1702, and the communication interface 1703 are connected to each other through a bus 1704. The communication device may be configured to perform related steps of a transport block segmentation method. The communication device may be a terminal device in a wireless communication system or a chip in a terminal device, for example, UE or a chip in UE. The processor 1701 in the communication device is configured to read computer program code stored in the memory 1702, to perform the method according to any one of the embodiments shown in FIG. 5 to FIG. 14.

The memory 1702 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1702 is configured to store a related computer program and data.

The processor 1701 may be one or more central processing units (central processing units, CPUs). When the processor 1701 is one CPU, the CPU may be a single-core CPU or a multicore CPU.

For example, the processor 1701 in the communication device may be configured to read one or more programs stored in the memory 1702, to perform the following operations:
determining a media access control MAC control element CE format based on configuration information, where the configuration information indicates the terminal device to report a data amount in a logical channel group LCG by using a parameter in a first BS table; and
generating and reporting a buffer status information report corresponding to the MAC CE format.

For example, the processor 1701 in the communication device may be further configured to read one or more programs stored in the memory 1702, to perform the following operations:
determining a media access control MAC control element CE format based on a quantity of padding bits and configuration information, where the configuration information indicates the terminal device to report a data amount in a logical channel group LCG by using a parameter in a first BS table; and
generating and reporting a buffer status information report corresponding to the MAC CE format.

It should be noted that, for an implementation of each operation, reference may be made to corresponding descriptions of the method according to any one of the embodiments shown in FIG. 5 to FIG. 14.

It should be noted that although only the processor 1701, the memory 1702, the communication interface 1703, and the bus 1704 of the communication device shown in FIG. 17 are illustrated, in a specific implementation process, a person skilled in the art should understand that the communication device further includes another component necessary for normal operation. Moreover, according to a specific requirement, a person skilled in the art should understand that the communication device may further include hardware components for implementing other additional functions. In addition, a person skilled in the art should understand that the communication device may include only components necessary for implementing embodiments of this application, but not necessarily include all the components shown in FIG. 17.

An embodiment of this application further provides a chip. The chip includes a processor, configured to invoke a computer program from a memory and run the computer program, to enable a device equipped with the chip to perform the method described in any one of the embodiments in FIG. 5 to FIG. 14. The chip may be a chip in a communication device.

An embodiment of this application further provides a computer-readable storage medium (Memory). The computer-readable storage medium stores a computer program, and when the computer program is run, the method described in any one of the embodiments in FIG. 5 to FIG. 14 is implemented. It may be understood that the computer-readable storage medium herein may include a built-in storage medium in a device, and certainly may also include an expanded storage medium supported by the device. The computer-readable storage medium provides storage space, and the storage space stores an operating system of the device. In addition, the storage space further stores one or more computer programs suitable for being loaded and executed by a processor of the device. It should be noted that the computer-readable storage medium herein may be a high-speed RAM, or may be a non-volatile memory (non-volatile memory), for example, at least one magnetic disk memory. Optionally, the computer-readable storage medium may be at least one computer-readable storage medium located far away from the processor.

An embodiment of this application further provides a computer program product. The computer program product includes computer program code. When the computer program code is run on a communication device, the method procedure described in any one of the embodiments in FIG. 5 to FIG. 14 is implemented.

In the foregoing embodiments, the description of each embodiment has respective focuses. For a part that is not described in detail in an embodiment, refer to related descriptions in other embodiments.

It should be understood that the processor mentioned in embodiments of this application may be a CPU, or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logical device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a ROM, a programmable read-only memory (Programmable ROM, PROM), an EPROM, an electrically erasable programmable read-only memory (Electrically EPROM, EEPROM), or a flash memory. The volatile memory may be a RAM, and serves as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general purpose processor, a DSP, an ASIC, an FPGA or another programmable logic device, a discrete gate, a transistor logical device, or a discrete hardware component, the memory (a storage module) is integrated into the processor.

It should be noted that the memory described in this specification aims to include, but is not limited to, these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. When the foregoing integrated unit is implemented in the form of a software functional unit and sold or used as an independent product, the integrated unit may be stored in a computer-readable storage medium.

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between associated objects.

A sequence of the steps of the method in embodiments of this application may be adjusted, combined, or removed based on an actual requirement.

The modules in the apparatus in embodiments of this application may be combined, divided, or deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A data reporting method, applied to a terminal device, wherein the method comprises:
determining a media access control MAC control element CE format based on configuration information, wherein the configuration information indicates the terminal device to report a data amount in a logical channel group LCG by using a parameter in a first BS table; and
generating and reporting a buffer status information report corresponding to the MAC CE format.

2. The method according to claim 1, wherein the buffer status information report comprises a buffer status report BSR, and determining the media access control MAC control element CE format based on the configuration information comprises:
if the terminal device has an LCG having a first to-be-reported data amount, determining, based on the configuration information, that the MAC CE format is a first format, wherein a BSR MAC CE corresponding to the first format comprises a first indication field and a second indication field, the first indication field indicates the first data amount corresponding to the LCG, and the second indication field indicates that information in the first indication field is represented by using the parameter in the first BS table or represented by using a parameter in a second BS table.

3. The method according to claim 1, wherein the buffer status information report comprises a buffer status report BSR, and determining the media access control MAC control element CE format based on the configuration information comprises:
if the terminal device has only one LCG having a first to-be-reported data amount, determining, based on the configuration information, that the MAC CE format is a second format, wherein a BSR MAC CE corresponding to the second format comprises a first indication field, the first indication field indicates the first data amount corresponding to the LCG, and information in the first indication field is represented by using the parameter in the first BS table.

4. The method according to claim 3, wherein a MAC subheader of the BSR MAC CE corresponding to the second format comprises a third indication field, and the third indication field indicates that the BSR MAC CE is a BSR MAC CE of a second format type.

5. The method according to claim 2, wherein the first format comprises an enhanced BSR format or an enhanced long BSR format.

6. The method according to claim 3 or 4, wherein the second format comprises an enhanced short BSR format or an enhanced short truncated BSR format.

7. The method according to any one of claims 2 to 6, wherein the BSR is a regular Regular BSR or a periodic periodic BSR.

8. The method according to claim 1, wherein the buffer status information report comprises a delay status report DSR, a DSR MAC CE corresponding to the MAC CE format comprises a fourth indication field and a fifth indication field, the fourth indication field indicates a second data amount that needs to be reported in the corresponding LCG, and the fifth indication field indicates a remaining time to expiration of data corresponding to the second data amount.

9. The method according to claim 8, wherein the data corresponding to the second data amount comprises data corresponding to a service data unit SDU that is deleted by a radio link control RLC layer indicated by a packet data convergence protocol PDCP layer, and the PDCP layer indicates, when a discard timer of the data corresponding to the SDU expires, the RLC layer to delete the SDU, wherein
if the data corresponding to the SDU or at least one segment of the SDU has been delivered to a lower layer, a remaining time to expiration of the data corresponding to the SDU or the at least one segment of the SDU is 0; or a remaining time to expiration of the data corresponding to the SDU or the at least one segment of the SDU is a minimum value in a remaining time to expiration of at least one piece of target data; or a data amount of the data corresponding to the SDU or at least one segment of the SDU is reported by using a buffer status report BSR; and the at least one piece of target data is data other than the SDU or the at least one segment of the SDU in the data corresponding to the second data amount.

10. A data reporting method, applied to a terminal device, wherein the method comprises:
determining a media access control MAC control element CE format based on a quantity of padding bits and configuration information, wherein the configuration information indicates the terminal device to report a data amount in a logical channel group LCG by using a parameter in a first BS table; and
generating and reporting a buffer status information report corresponding to the MAC CE format.

11. The method according to claim 10, wherein the buffer status information report comprises a buffer status report BSR, and determining the media access control MAC control element CE format based on the quantity of padding bits and the configuration information comprises:
if the terminal device has an LCG having a first to-be-reported data amount, and the quantity of padding bits is greater than or equal to a sum of a size of a BSR MAC CE corresponding to a first format and a size of a MAC subheader of the BSR MAC CE corresponding to the first format, determining, based on the configuration information, that the MAC CE format is the first format, wherein the BSR MAC CE corresponding to the first format comprises a first indication field and a second indication field, the first indication field indicates the first data amount that needs to be reported in the corresponding LCG, and the second indication field indicates that information in the first indication field is represented by using the parameter in the first BS table or a parameter in a second BS table.

12. The method according to claim 10, wherein the buffer status information report comprises a buffer status report BSR, and determining the media access control MAC control element CE format based on the quantity of padding bits and the configuration information comprises:
if the terminal device has a plurality of LCGs having first to-be-reported data amounts, and the quantity of padding bits is greater than or equal to a sum of three bytes and a size of a MAC subheader of a BSR MAC CE corresponding to a first format, and is less than a sum of a size of the BSR MAC CE corresponding to the first format and the size of the MAC subheader of the BSR MAC CE corresponding to the first format, determining, based on the configuration information, that the MAC CE format is a third format, wherein the third format is a truncated type of the first format.

13. The method according to claim 10, wherein the buffer status information report comprises a buffer status report BSR, and determining the media access control MAC control element CE format based on the quantity of padding bits and the configuration information comprises:
if the terminal device has a plurality of LCGs having first to-be-reported data amounts, and the quantity of padding bits is greater than or equal to a sum of two bytes and a size of a MAC subheader of a long BSR MAC CE, and is less than a sum of three bytes and a size of a MAC subheader of a BSR MAC CE corresponding to a first format, determining, based on the configuration information, that the MAC CE format is a long truncated BSR format.

14. The method according to claim 10, wherein the buffer status information report comprises a buffer status report BSR, and determining the media access control MAC control element CE format based on the quantity of padding bits and the configuration information comprises:
if the quantity of padding bits is less than a sum of two bytes and a size of a MAC subheader of a long BSR MAC CE, and the terminal device has a plurality of LCGs having first to-be-reported data amounts, determining, based on the configuration information, that the MAC CE format is a short truncated BSR format; or
if the quantity of padding bits is less than a sum of two bytes and a size of a MAC subheader of a long BSR MAC CE, and the terminal device has one LCG having a first to-be-reported data amount, determining, based on the configuration information, that the MAC CE format is a short BSR format.

15. The method according to any one of claims 11 to 13, wherein the first format comprises an enhanced BSR format or an enhanced long BSR format.

16. The method according to claim 10, wherein the buffer status information report comprises a delay status report DSR, a DSR MAC CE corresponding to the MAC CE format comprises a fourth indication field and a fifth indication field, the fourth indication field indicates a second data amount that needs to be reported in the corresponding LCG, and the fifth indication field indicates a remaining time to expiration of data corresponding to the second data amount.

17. The method according to claim 16, wherein the data corresponding to the second data amount comprises data corresponding to a service data unit SDU that is deleted by a radio link control RLC layer indicated by a packet data convergence protocol PDCP layer, and the PDCP layer indicates, when a discard timer of the data corresponding to the SDU expires, the RLC layer to delete the SDU, wherein
if the data corresponding to the SDU or at least one segment of the SDU has been delivered to a lower layer, a remaining time to expiration of the data corresponding to the SDU or the at least one segment of the SDU is 0; or a remaining time to expiration of the data corresponding to the SDU or the at least one segment of the SDU is a minimum value in a remaining time to expiration of at least one piece of target data; or a data amount of the data corresponding to the SDU or at least one segment of the SDU is reported by using a buffer status report BSR; and the at least one piece of target data is data other than the SDU or the at least one segment of the SDU in the data corresponding to the second data amount.

18. A data reporting apparatus, used in a terminal device, and comprising a module configured to perform the method according to any one of claims 1 to 9, or a module configured to perform the method according to any one of claims 10 to 17.

19. A communication device, comprising a processor, a memory, a communication interface, and one or more programs, wherein the one or more programs are stored in the memory, and when the one or more programs are configured to be executed by the processor, the one or more programs cooperate with the communication interface to implement the method according to any one of claims 1 to 9 or claims 10 to 17.

20. A computer-readable storage medium, wherein the computer-readable storage medium stores a computer program for execution by a device, and when the computer program is executed, the method according to any one of claims 1 to 9 or claims 10 to 17 is implemented.

21. A computer program product, wherein when the computer program product runs by a communication device, the communication device is enabled to perform the method according to any one of claims 1 to 9 or claims 10 to 17.
